# EUROPEAN PATENT APPLICATION

(11) **EP 2 579 178 A1**
(43) Date of publication of application: **10.04.2013**
(21) Application number: 11789478.2
(22) Date of filing: 02.06.2011
(51) Int. Cl.: G06F 21/24, H04L 9/08

(54) **CONTROLLER, CONTROL METHOD, COMPUTER PROGRAM, PROGRAM RECORDING MEDIUM, RECORDING APPARATUS, AND METHOD OF MANUFACTURING RECORDING APPARATUS**

(30) Priority: 04.06.2010 US 351450 P
(71) Applicant: Panasonic Corporation, Kadoma-shi Osaka 571-8501 (JP)
(72) Inventor: YAMAGUCHI, Takahiro, Osaka 540-6207 (JP); YAMAMOTO, Masaya, Osaka 540-6207 (JP)
(74) Representative: Grünecker, Kinkeldey, Stockmair & Schwanhäusser
(86) International application number: PCT/JP2011/003134
(87) International publication number: WO 2011/152065

(57) **Abstract**

A controller for embedding in a recording medium apparatus in order to control memory access comprises a unique key generation unit that generates a unique key assigned to the controller, a decryption unit that acquires encrypted key information generated by encrypting a private key for the recording medium apparatus with the unique key, and that decrypts the encrypted key information so acquired with the unique key to generate decrypted information; a private key verification unit that verifies whether or not the decrypted information is the private key, and an encrypted key information write unit that writes the encrypted key information so acquired to memory when the decrypted information is verified to be the private key.

## Description

### [Technical Field]

The present invention relates to technology for a controller that is embedded into a recording medium apparatus to control memory access, as well as to a manufacturing method for a recording apparatus from memory and the controller.

### [Background Art]

Digital content distribution services are becoming popular. These services digitally distribute digital content, i.e. digital works such as a movie or music, via a network to a recording apparatus (for example, a KIOSK terminal, a personal computer, and so on), which is used to record the digital content on a recording medium. A playback apparatus (for example, a music player, a portable video display terminal, and so on) then plays back the content recorded on the recording medium.

In this case, in order to protect the rights of the digital content copyright owner, technology is required to prevent digital content that has been recorded on a recording medium from being copied onto another recording medium and played back.

Patent Literature 1 recites storing, on a recording medium, a medium-specific number that is unique to the recording medium and that cannot be overwritten. The licensor generates a medium-specific key based on the medium-specific number of the recording medium, encrypts a decryption key for decrypting encrypted data using the medium-specific key, and writes the result on the recording medium as license information. The playback apparatus reads the medium-specific number from the recording medium, generates the medium-specific key based on the medium-specific number so read, and decrypts the license information, i.e. the encrypted decryption key, into the original decryption key using the medium-specific key. The playback apparatus then decrypts encrypted data using the decryption key, thus generating plaintext digital data.

With this technology, even if the encrypted data and the license information which are recorded on an authorized recording medium are copied onto an unauthorized recording medium, any attempt to decrypt the encrypted data from the unauthorized recording medium will fail. This is because the medium-specific number for the authorized recording medium cannot be copied onto the unauthorized recording medium, and therefore the medium-specific number for the authorized recording medium cannot be acquired from the unauthorized recording medium. The license information, i.e. the encrypted decryption key, thus cannot be properly decrypted.

### [Citation List]

### [Patent Literature]

[Patent Literature 1]
   Japanese Patent Application Publication No. H05-257816

### [Summary of Invention]

### [Technical Problem]

Suppose that a card manufacturer stores the same media ID in multiple memory cards. Specifically, a first and a second memory card are made to contain the same media ID by the card manufacturer. Further suppose that legitimate encrypted content is stored on the first memory card. This encrypted content is generated by encrypting content with a content key generated from the media ID.

Suppose that an unauthorized copy of the encrypted content stored on the first memory card is then copied onto the second memory card. For unauthorized playback of the encrypted content copied onto the second memory card to occur, the media ID is acquired from the second memory card, and a content key is generated from the acquired media ID. However, since the media ID stored on the second memory card is the same as the media ID stored on the first memory card, the content key generated from the media ID of the second memory card is the same as the content key generated from the media ID of the first memory card. Therefore, an attempt to use the generated content key to decrypt the encrypted content copied onto the second memory card succeeds.

As described, conventional technology is problematic in that, when a memory card manufacturer fraudulently stores the same media ID on a plurality of memory cards, the rights of the digital content copyright owner cannot be protected.

In order to solve this problem, the present invention aims to provide a controller, control method, computer program, program recording medium, recording apparatus, and manufacturing method therefor such that the same key information cannot be stored on a plurality of media.

### [Solution to Problem]

In order to solve the above problem, the present invention provides a controller for embedding in a recording medium apparatus and controlling memory access, comprising: a unique key generation unit operable to generate a unique key assigned to the controller; a decryption unit operable to (i) acquire encrypted key information, the encrypted key information being generated by encrypting a private key for the recording medium apparatus with the unique key, and (ii) decrypt the encrypted key information so acquired with the unique key to generate decrypted information; a private key verification unit operable to verify whether or not the decrypted information generated by the decryption unit is the private key; and an encrypted key information write unit operable to write the encrypted key information so acquired to memory when the decrypted information is verified to be the private key.

### [Advantageous Effects of Invention]

According to this structure, the controller decrypts the encrypted key information using a unique key assigned thereto and writes the encrypted key information so obtained to memory if the decrypted key information thus generated is verified to be a private key for the recording medium apparatus. Therefore, the controller has the advantageous effect of ensuring that the same encrypted key information does not come to be stored in a plurality of recording medium apparatuses.

### [Brief Description of Drawings]

The aims, effects, and characteristic features of the invention are described below with reference to the accompanying drawings. The accompanying drawings illustrate a specific example of the present invention.
Fig. 1 is a block diagram showing the overall configuration of a key issuing authority apparatus 1100, a controller manufacturer apparatus 1200, a media assembler apparatus 1400, and a key distribution server apparatus 1800 of a manufacturing system 10 serving as an Embodiment of the present invention.
Fig. 2 is a block diagram showing the structure of the key issuing authority apparatus 1100.
Figs. 3A, 3B, 3C, and 3D are diagrams showing data structures handled by the key issuing authority apparatus 1100.

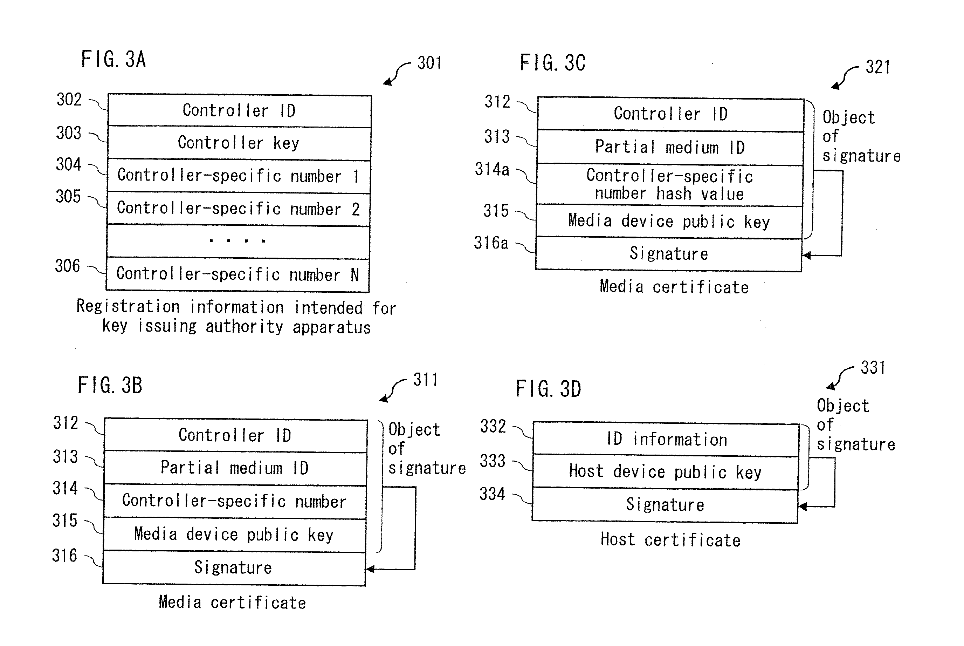

Fig. 3A shows the data structure of registration information 301 registered in the key issuing authority apparatus 1100.

Fig. 3B shows the data structure of a media certificate 311.

Fig. 3C shows the data structure of a media certificate 321, as a variation.

Fig. 3D shows the data structure of a host certificate 331.

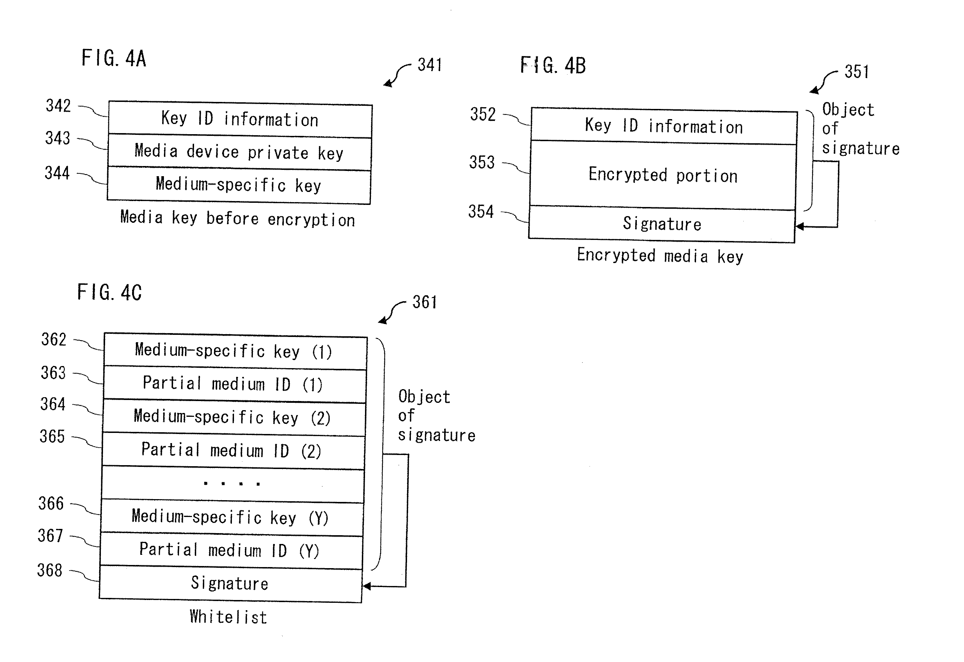

Figs. 4A, 4B, and 4C are diagrams showing data structures handled by the key issuing authority apparatus 1100.

Fig. 4A shows the data structure of a media key 341, before encryption.

Fig. 4B shows the data structure of an encrypted media key 351.

Fig. 4C shows the data structure of a whitelist 361.

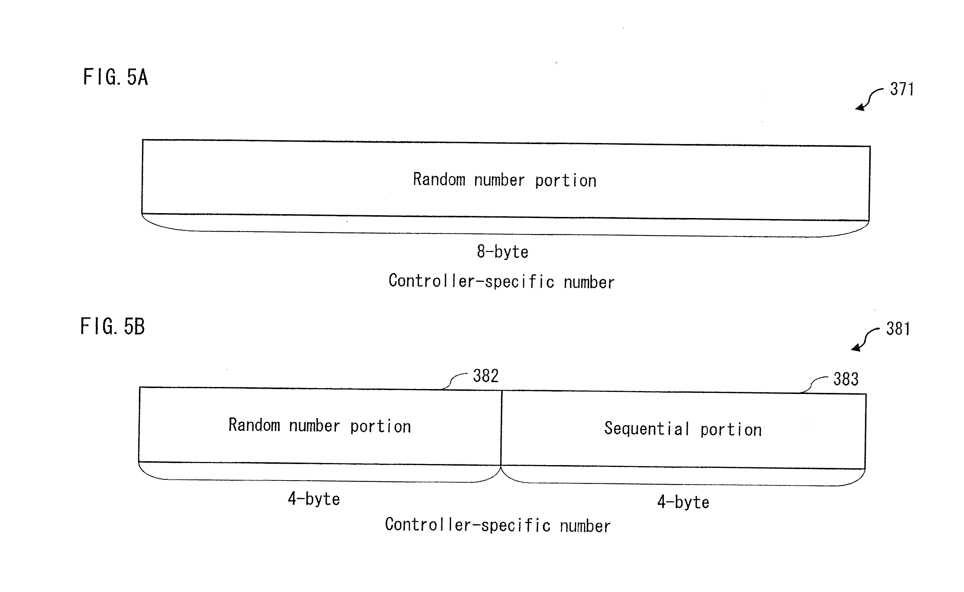

Figs. 5A and 5B are diagrams showing the data structure of a controller-specific number.

Fig. 5A shows the data structure of a controller-specific number 371.

Fig. 5B shows a data structure of a controller-specific number 381, as a variation.

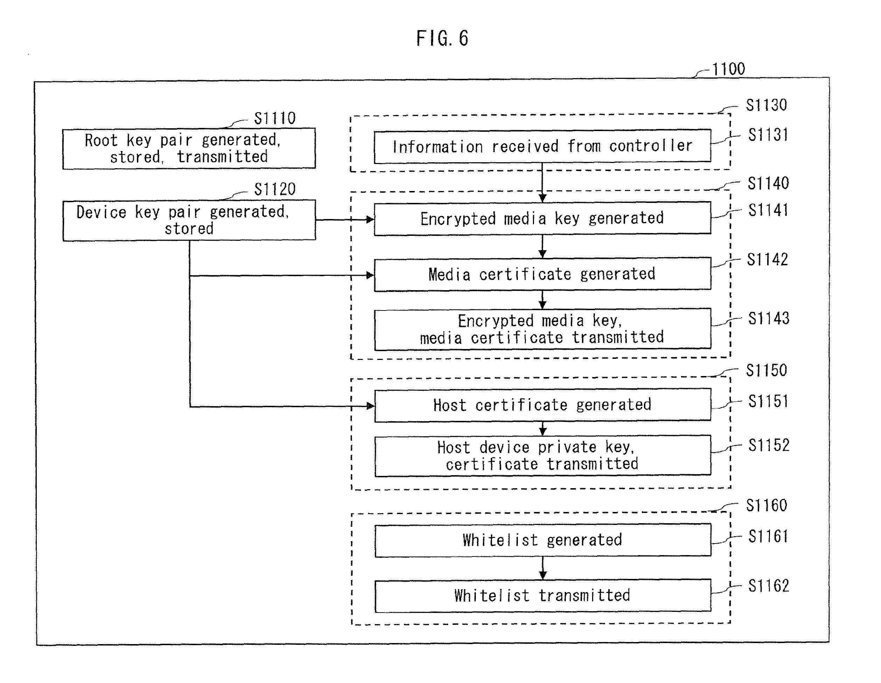

Fig. 6 is a flowchart showing the operations of the key issuing authority apparatus 1100 when issuing a key.

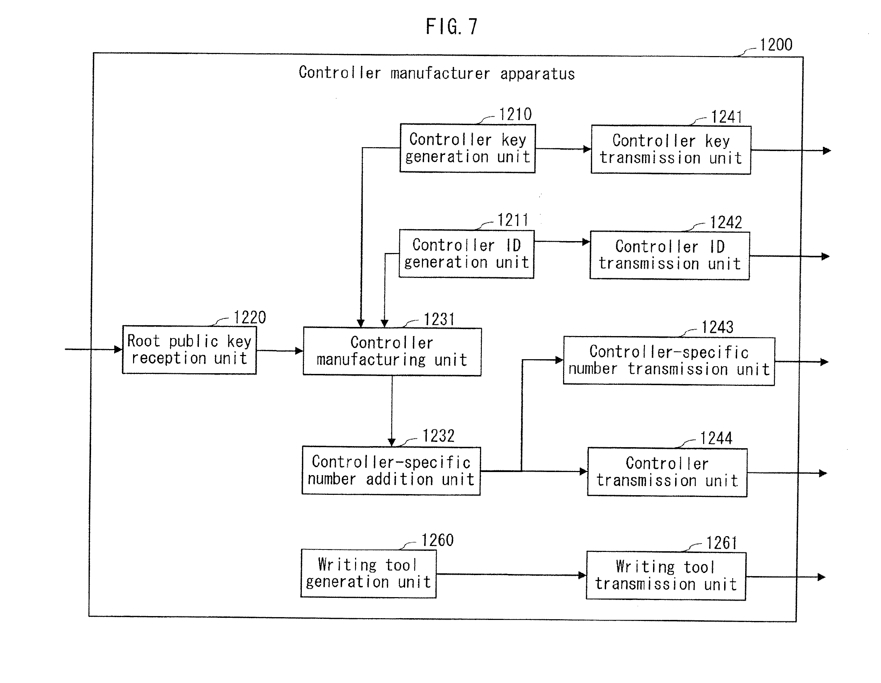

Fig. 7 is a block diagram showing the structure of the controller manufacturer apparatus 1200.

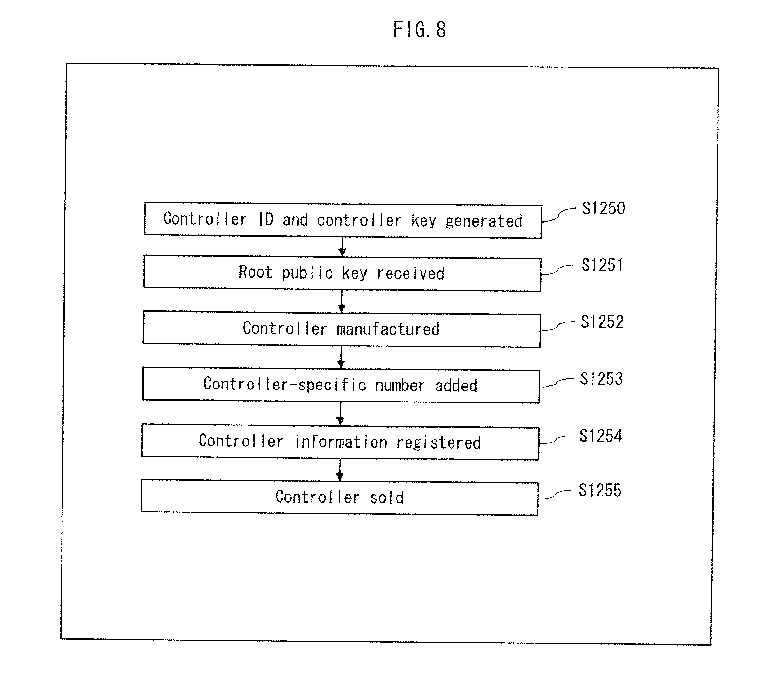

Fig. 8 is a flowchart showing the operations of the controller manufacturer apparatus 1200 when manufacturing a controller.

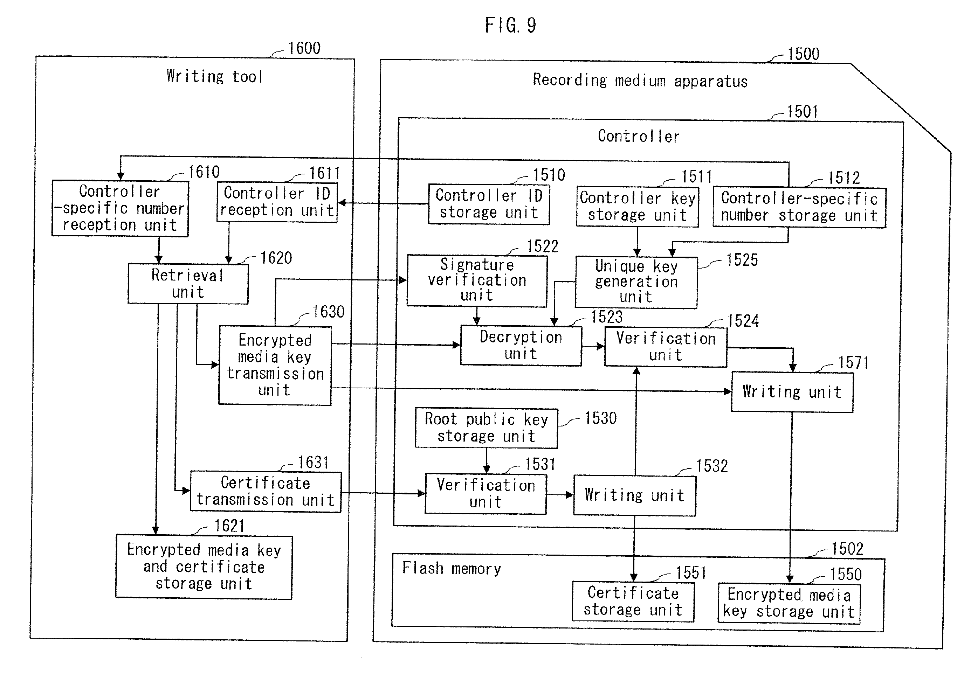

Fig. 9 is a flowchart showing the structure of a recording medium apparatus 1500 and a writing tool 1600.

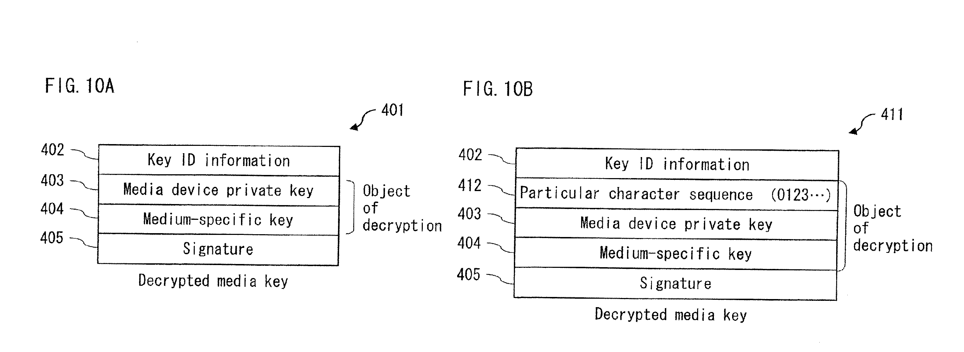

Figs. 10A and 10B show data structures handled by the recording medium apparatus 1500.

Fig. 10A shows the data structure of a decrypted media key 401.

Fig. 10B shows the data structure of a decrypted media key 411, as a variation.

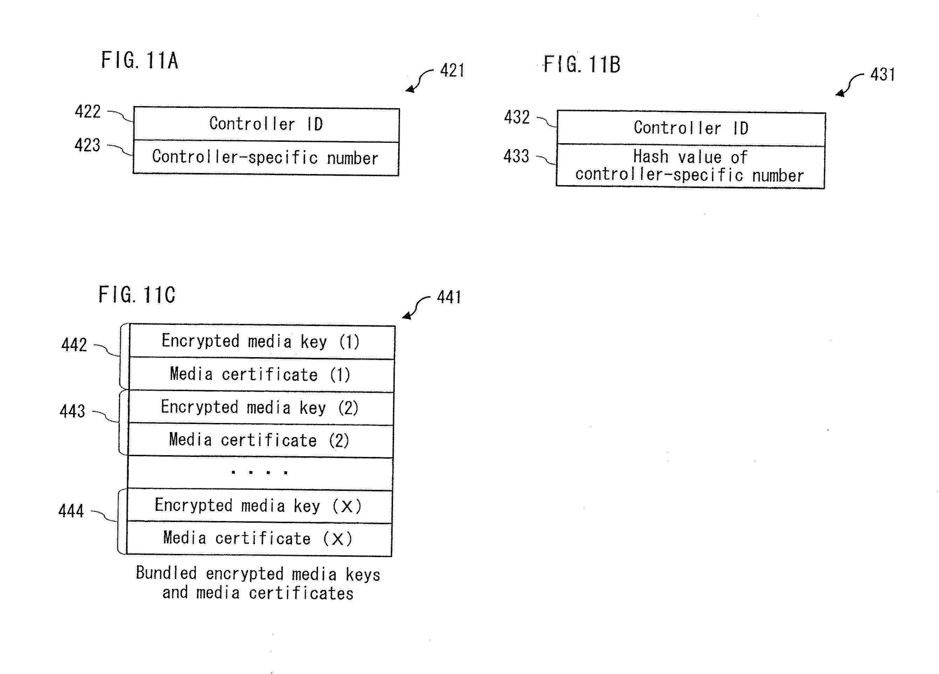

Figs. 11A, 11B, and 11C, show data structures handled by the writing tool 1600.

Fig. 11A shows the data structure of a pair consisting of a controller ID and of a controller-specific number 421.

Fig. 11B shows the data structure of a pair consisting of the controller ID and of a hash value 431 of the controller-specific number.

Fig. 11C shows the data structure of a bundle 441 consisting of encrypted media keys and media certificates.

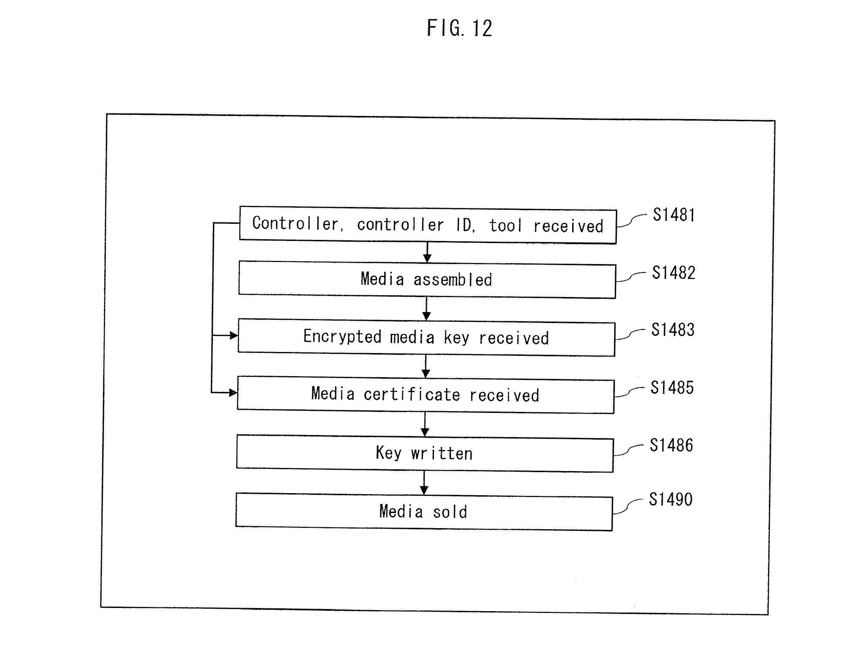

Fig. 12 is a flowchart showing the assembly of the recording medium apparatus by a media assembler.

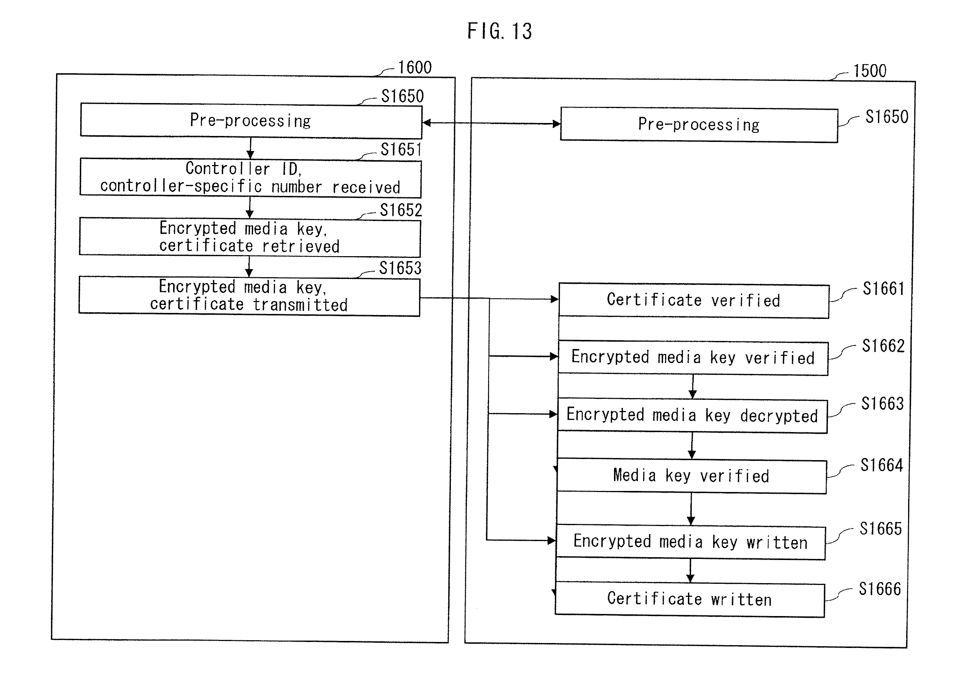

Fig. 13 is a flowchart showing writing operations performed by the media assembler with the writing tool 1600 on the recording medium apparatus 1500.

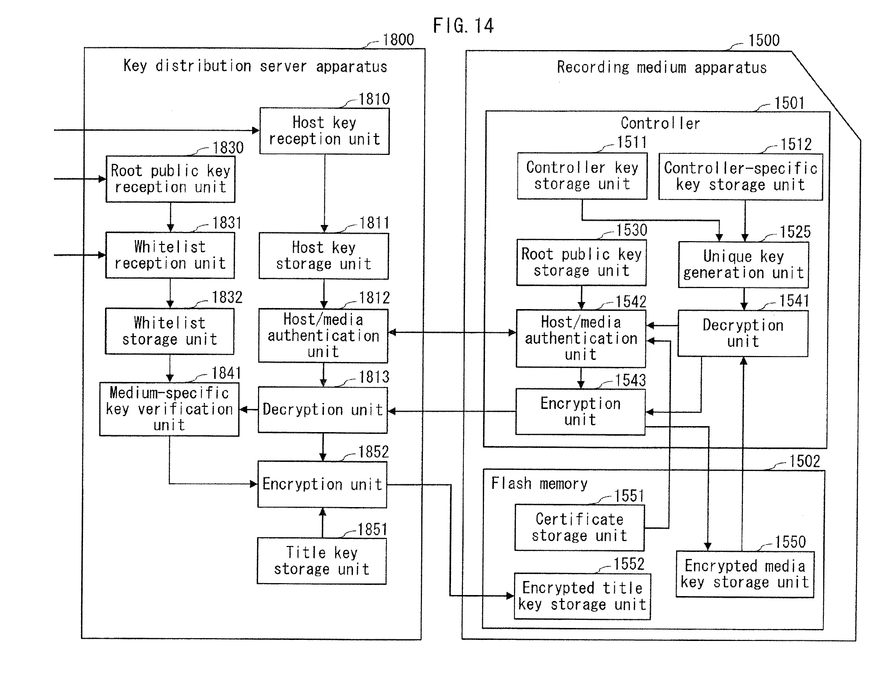

Fig. 14 is a block diagram showing the structure of the key distribution server apparatus 1800 and the recording medium apparatus 1500.

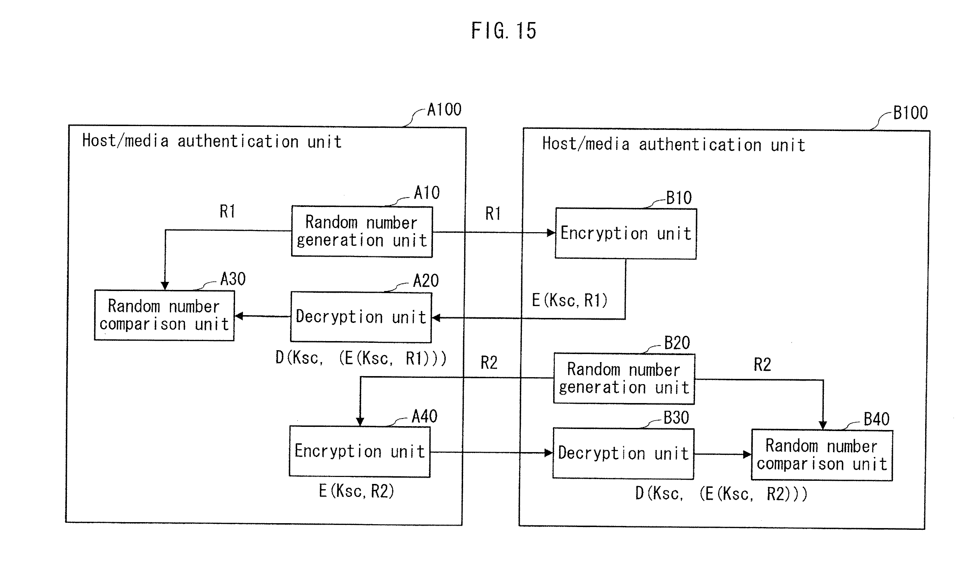

Fig. 15 is a block diagram showing the structure of a host/media authentication unit A100 and a host/media authentication unit B100.

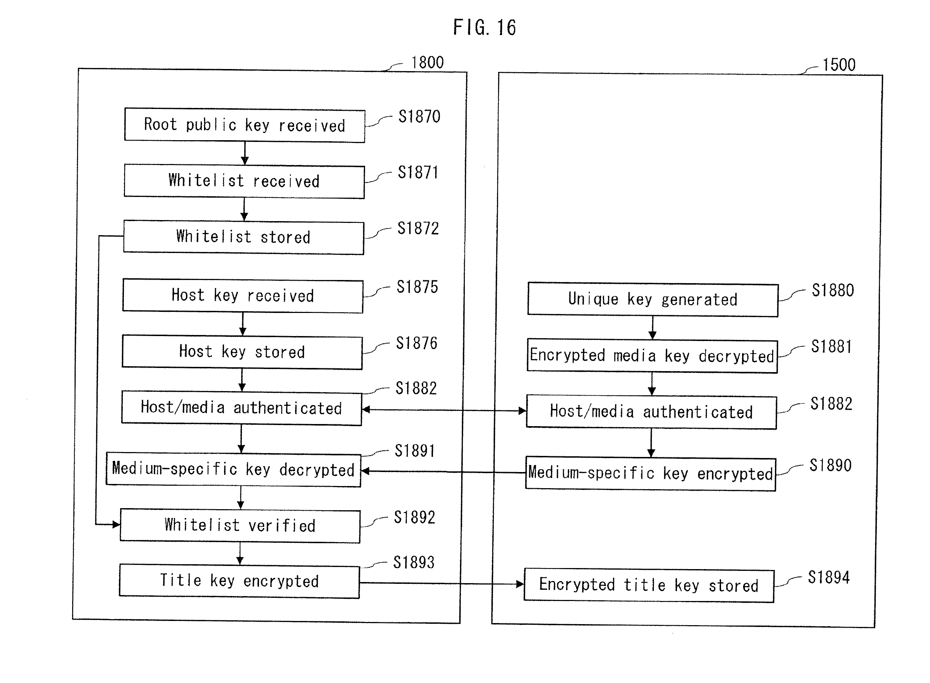

Fig. 16 is a flowchart showing key distribution operations between the key distribution server apparatus 1800 and the recording medium apparatus 1500.

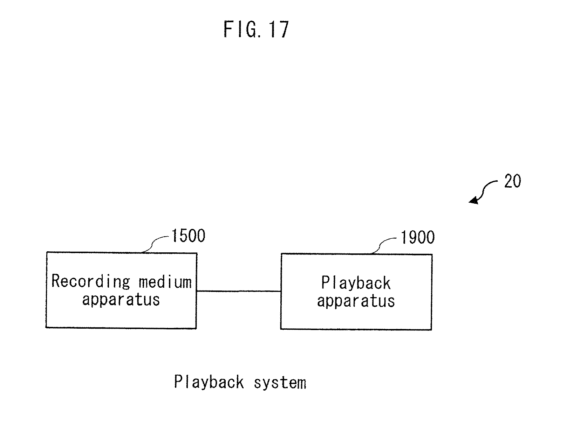

Fig. 17 is a block diagram showing the connection between the recording medium apparatus 1500 and a playback apparatus 1900 in a playback system 20 serving as an Embodiment of the present invention.

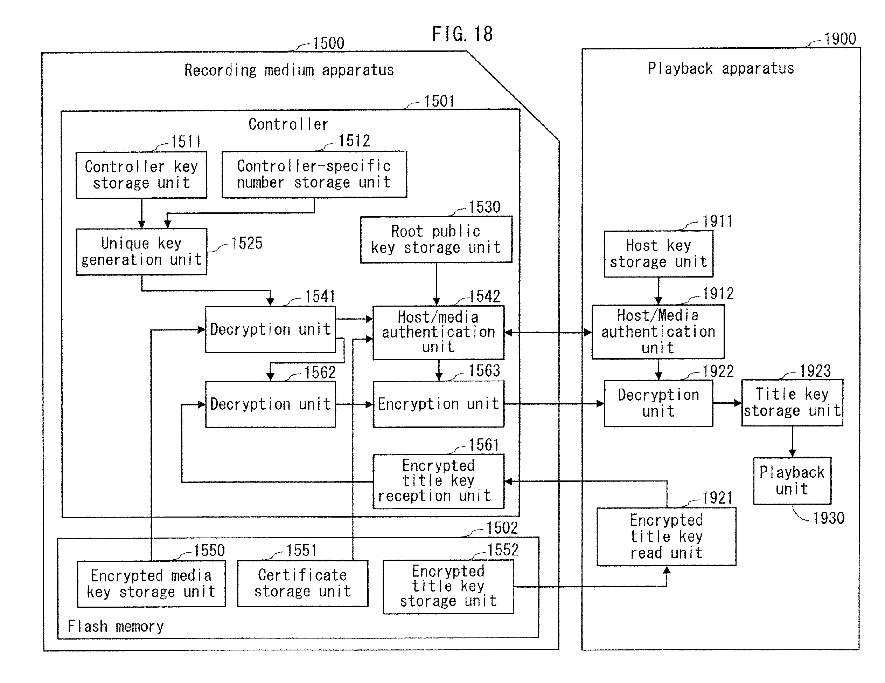

Fig. 18 is a block diagram showing the structure of the recording medium apparatus 1500 and the playback apparatus 1900.

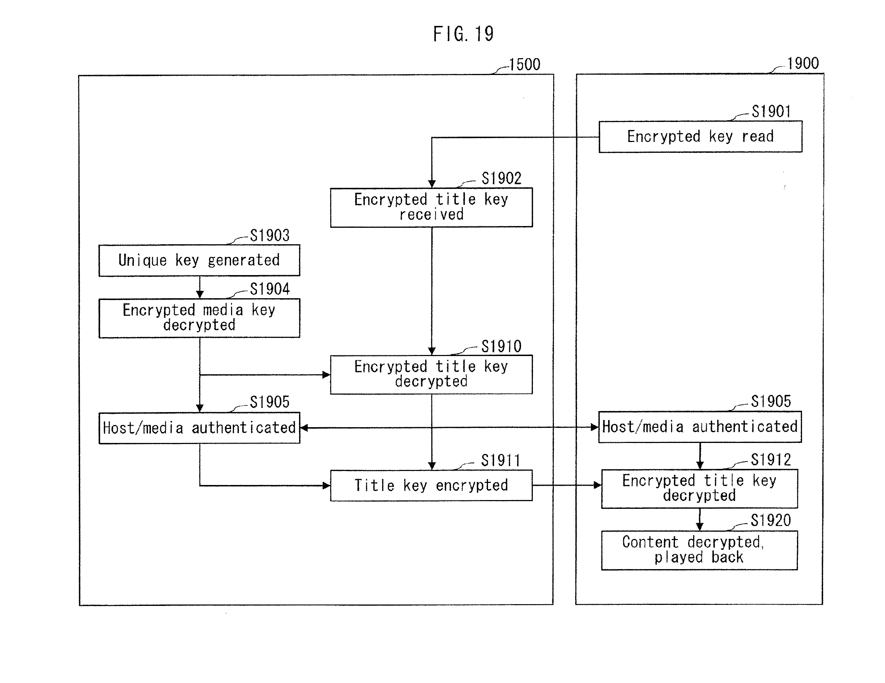

Fig. 19 is a flowchart showing playback operations between the recording medium apparatus 1500 and the playback apparatus 1900.

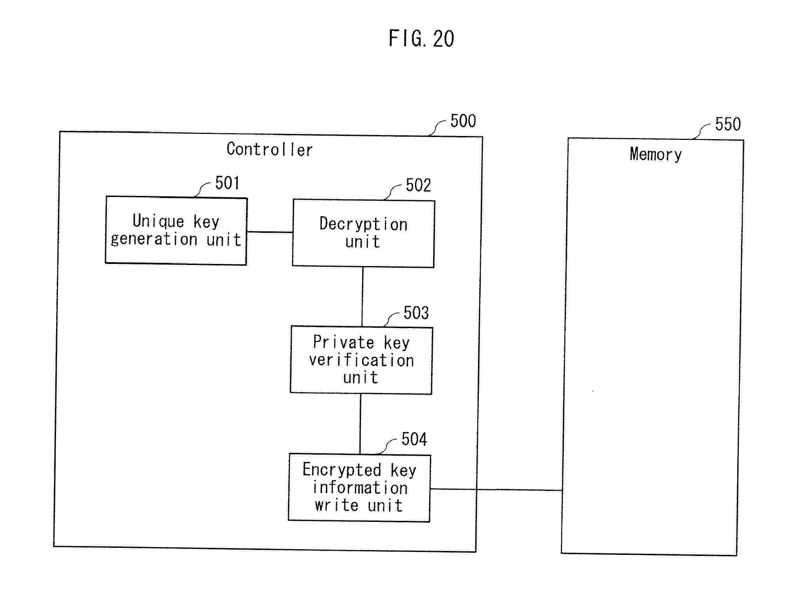

Fig. 20 is a block diagram showing the structure of a variation on the controller 500.

### [Description of Embodiments]

In one aspect, the present invention provides a controller for embedding in a recording medium apparatus and controlling memory access, comprising: a unique key generation unit operable to generate a unique key assigned to the controller; a decryption unit operable to (i) acquire encrypted key information, the encrypted key information being generated by encrypting a private key for the recording medium apparatus with the unique key, and (ii) decrypt the encrypted key information so acquired with the unique key to generate decrypted information; a private key verification unit operable to verify whether or not the decrypted information generated by the decryption unit is the private key; and an encrypted key information write unit operable to write the encrypted key information so acquired to memory when the decrypted information is verified to be the private key.

In a further aspect, the controller may also comprise: an encrypted key information verification unit operable to (i) acquire the encrypted key information and signature data, the signature data being generated by digitally signing the encrypted key information, and (ii) verify the signature data using the encrypted key information so acquired, granting the decryption unit permission to decrypt if the verification succeeds and denying the decryption unit permission to decrypt if the verification fails, wherein the decryption unit generates the decrypted information if permission to decrypt is obtained, and prohibits the generation of the decrypted information if permission to decrypt is not obtained.

In another aspect, a partial medium ID is generated from a controller-specific number assigned to the controller, the partial medium ID forms a portion of ID information identifying the recording medium apparatus, a media certificate includes at least the partial medium ID and further includes signature data generated for at least the partial medium ID, the controller further comprises: a media certificate verification unit operable to (i) acquire the media certificate and verify the signature data included in the media certificate so acquired, and (ii) grant permission to write the media certificate if the signature data verification succeeds, and deny permission to write the media certificate if the signature data verification fails, and a media certificate write unit operable to write the media certificate to memory if permission to write the media certificate is obtained and to prohibit writing of the media certificate if permission is not obtained, and the encrypted key information write unit forbids writing the encrypted key information acquired by the decryption unit to memory when permission to write the media certificate is not obtained from the media certificate verification unit.

In yet another aspect, the controller comprises: an information storage unit operable to store, in advance, a controller key and a controller-specific number assigned to the controller, wherein the unique key generation unit generates the unique key using the controller key and the controller-specific number stored in the information storage unit.

In yet a further aspect of the controller, the encrypted key information is generated by encrypting a particular character sequence and the private key, and the private key verification unit (i) determines whether or not the particular character sequence is included in the decrypted information generated by the decryption unit, and (ii) verifies the private key to be included in the decrypted information if the determination is affirmative.

In another aspect of the controller, the private key verification unit (i) generates signature data by using the decrypted information generated by the decryption unit as a key to affix a digital signature, (ii) verifies the signature data so generated by using a public key paired with the private key, and (iii) judges the decrypted information generated by the decryption unit to be the private key when verification succeeds.

### [Embodiment 1]

A manufacturing system 10 and a playback system 20 are described below as an Embodiment of the present invention, with reference to the drawings.

### (Overall Configuration)

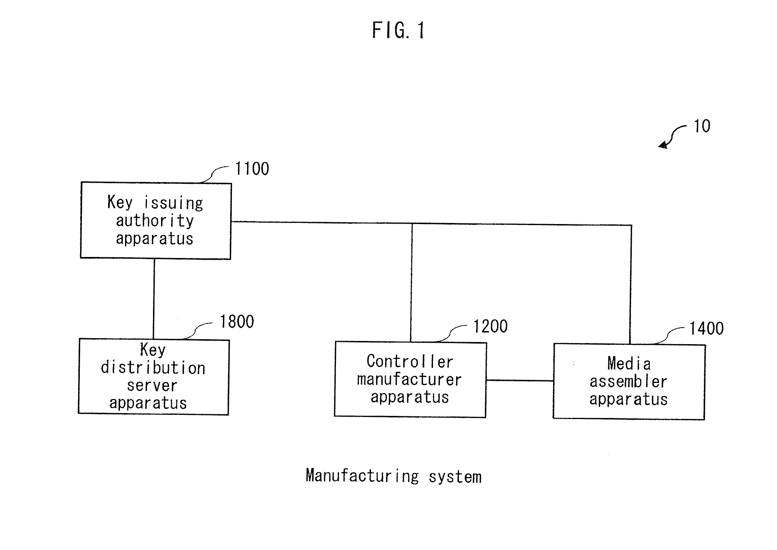

Fig. 1 shows an overall configuration diagram of the manufacturing system 10 for a recording medium apparatus 1500.

As shown in Fig. 1, the manufacturing system 10 is made up of a key issuing authority apparatus 1100, a controller manufacturer apparatus 1200, a media assembler apparatus 1400, and a key distribution server apparatus 1800. The key issuing authority apparatus 1100, the controller manufacturer apparatus 1200, and the media assembler apparatus 1400 belong to a key issuing authority, a controller manufacturer, and a media assembler, respectively.

The following describes a case in which the recording medium apparatus 1500 is a memory card.

### (Detailed Structure of Key Issuing Authority)

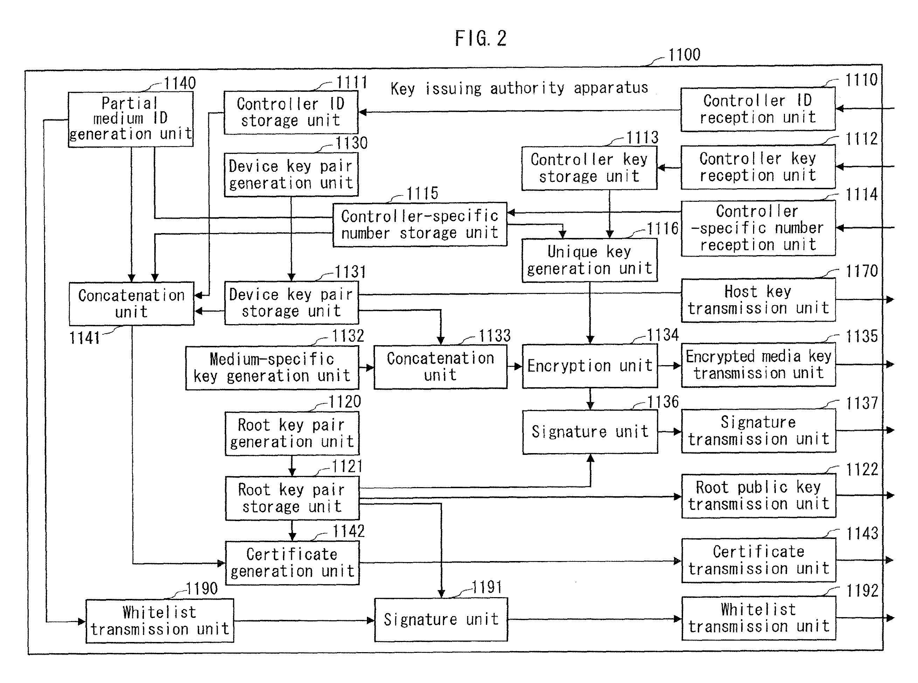

Fig. 2 shows the detailed structure of the key issuing authority apparatus 1100.

As shown in Fig. 2, the key issuing authority apparatus 1100 is made up of a controller ID reception unit 1110, a controller ID storage unit 1111, a controller key reception unit 1112, a controller key storage unit 1113, a controller-specific number reception unit 1114, a controller-specific number storage unit 1115, a unique key generation unit 1116, a root key pair generation unit 1120, a root key pair storage unit 1121, a root public key transmission unit 1122, a device key pair generation unit 1130, a device key pair storage unit 1131, a medium-specific key generation unit 1132, a concatenation unit 1133, an encryption unit 1134, an encrypted media key transmission unit 1135, a signature unit 1136, a signature transmission unit 1137, a partial medium ID generation unit 1140, a concatenation unit 1141, a certificate generation unit 1142, a certificate transmission unit 1143, a host key transmission unit 1170, a whitelist generation unit 1190, a signature unit 1191, and a whitelist transmission unit 1192.

The controller ID reception unit 1110 receives a controller ID from the controller manufacturer apparatus 1200.

The controller ID storage unit 1111 stores the controller ID received by the controller ID reception unit 1110.

The controller key reception unit 1112 receives a controller key associated with the controller ID from the controllers manufacturer apparatus 1200.

The controller key storage unit 1113 stores the controller key received by the controller key reception unit 1112 in association with the controller ID received by the controller ID reception unit 1110.

The controller-specific number reception unit 1114 receives a controller-specific number for each individual controller from the controller manufacturer apparatus 1200.

The controller-specific number storage unit 1115 stores the controller-specific number received by the controller-specific number reception unit 1114.

The unique key generation unit 1116 generates a unique key from the controller key stored by the controller key storage unit 1113 and from the controller-specific number stored by the controller-specific number storage unit 1115. The unique key is calculated by substituting the controller key and the controller-specific number into an equation. For example, an XOR (exclusive or) operation may be performed on the controller key and a converted value obtained by converting the controller-specific number via a one-way function. Alternatively, a hash value may be used, which is obtained via hash calculation rather than via the one-way function.

The root key pair generation unit 1120 generates a key pair consisting of a root public key and a root private key for the key issuing authority apparatus 1100, which is the security core in the recording medium apparatus 1500 manufacturing system 10.

The root key pair storage unit 1121 stores the key pair consisting of the root public key and the root private key generated by the root key pair generation unit 1120.

The root public key transmission unit 1122 transmits the root public key stored by the root key pair storage unit 1121 to the controller manufacturer apparatus 1200 and the key distribution server apparatus 1800.

The device key pair generation unit 1130 generates a media device key pair consisting of a media device public key and a media device private key (also called a secret key), which are to be embedded in the recording medium apparatus 1500, as well as a host device key pair consisting of a host device public key and host device private key, which are to be embedded in the key distribution server apparatus 1800.

The device key pair storage unit 1131 stores the media device key pair and the host device key pair generated by the device key pair generation unit 1130.

The medium-specific key generation unit 1132 generates a medium-specific key that is to be embedded in the recording medium apparatus 1500. The medium-specific key may be generated as follows. A random number generator generates a random number, and the random number so generated is used as the medium-specific key. This method results in a medium-specific key that is statistically unique. Alternatively, the medium-specific key may be generated through a consecutive number generation method. A serialized number resulting from this method is used as the medium-specific key. As a further alternative, the medium-specific key may be generated by using a one-way function to convert a serialized number, thus calculating a unique value that is used as the medium-specific key.

The concatenation unit 1133 generates a media key by concatenating the media device private key stored by the device key pair storage unit 1131 and the medium-specific key generated by the medium-specific key generation unit 1132. The concatenation unit 1133 may also generate the media key using only the media device private key stored by the device key pair storage unit 1131.

The encryption unit 1134 encrypts the media key generated by the concatenation unit 1133 using the unique key generated by the unique key generation unit 1116, thus yielding an encrypted media key.

The encrypted media key transmission unit 1135 transmits the encrypted media key generated by the encryption unit 1134 to the media assembler apparatus 1400.

The signature unit 1136 generates a signature for the encrypted media key, which is generated by the encryption unit 1134, using the root private key stored by the root key pair storage unit 1121. The signature unit 1136 may also generate a signature for the media key generated by the concatenation unit 1133 instead of the encrypted media key generated by the encryption unit 1134. In this case, however, the media assembler apparatus 1400 that receives the signature for the encrypted media key must perform signature verification on the media key obtained by decrypting the encrypted media key.

The signature transmission unit 1137 transmits the signature for the encrypted media key generated by the signature unit 1136 to the media assembler apparatus 1400.

The partial medium ID generation unit 1140 generates a partial medium ID, which is to be embedded in part of the identifying information (hereinafter, media ID) for the recording medium apparatus 1500, using the controller-specific number stored by the controller-specific number storage unit 1115. For example, a converted value obtained by converting the controller-specific number via a one-way function may be used as the partial medium ID, or a hash value obtained by performing a hash calculation on the controller-specific number may be so used.

The concatenation unit 1141 generates media certificate source data by concatenating the controller ID stored by the controller ID storage unit 1111, the media device public key stored by the device key pair storage unit 1131, the partial medium ID generated by the partial medium ID generation unit 1140, and the controller-specific number stored by the controller-specific number storage unit 1115. The concatenation unit 1141 also generates host certificate source data using the host device public key stored by the device key pair storage unit 1131.

The certificate generation unit 1142 generates a media certificate using the root private key stored by the root key pair storage unit 1121 by first generating a signature corresponding to the media certificate source data generated by the concatenation unit 1141, then affixing the signature so generated to the media certificate source data. The certificate generation unit 1142 also generates a host certificate by first generating a signature corresponding to the host certificate source data generated by the concatenation unit 1141, then affixing the signature so generated to the host certificate source data.

The certificate transmission unit 1143 transmits the media certificate generated by the certificate generation unit 1142 to the media assembler apparatus 1400, and transmits the host certificate similarly generated by the certificate generation unit 1142 to the key distribution server apparatus 1800. The certificate transmission unit 1143 also transmits the host certificate to a playback apparatus 1900.

The host key transmission unit 1170 transmits the host private key stored by the device key pair storage unit 1131 to the key distribution server apparatus 1800 and to the playback apparatus 1900.

The whitelist generation unit 1190 generates a whitelist from the partial medium ID generated by the partial medium ID generation unit 1140.

The following describes the purpose of the whitelist. Provided that the medium-specific key has been correctly embedded in the recording medium apparatus 1500 by the media assembler, a whitelist indicates any medium-specific key associated with a particular controller-specific number. The whitelist generation unit 1190 generates the whitelist, which is a list of associations for all manufactured recording medium apparatuses 1500, and supplies the key distribution server apparatus 1800 with the whitelist. Upon receipt of a title key acquisition request from a playback apparatus or a recording apparatus that is purchasing, playing back, or otherwise handling content, the key distribution server apparatus 1800 begins the process of distributing a key to the recording medium apparatus 1500. The key distribution server 1800 securely receives the medium-specific key, or information identifying the medium-specific key, stored in the recording medium apparatus 1500 and verifies whether or not the medium-specific key is listed on the whitelist. Accordingly, if listed on the whitelist, the recording medium apparatus 1500 to which the key is to be distributed can be judged valid and, as such, key distribution thereto is judged permissible. However, if not listed on the whitelist, a single medium-specific key can be judged as potentially being in use by a plurality of recording medium apparatuses 1500 or otherwise improperly used. As such, the key distribution server 1800 can determine that key distribution is not permissible.

The signature unit 1191 generates a signature for the whitelist generated by the whitelist generation unit 1190 using the root private key stored by the root key pair storage unit 1121, and then affixes the signature so generated to the whitelist.

The whitelist transmission unit 1192 transmits the whitelist to which the signature unit 1191 has attached the signature to the key distribution server apparatus 1800.

Fig. 3A shows sample registration information 301 registered in the key issuing authority apparatus 1100 by the controller manufacturer apparatus 1200. Fig. 3B shows a sample media certificate generated by the certificate generation unit 1142. Fig. 3C shows a variation of the media certificate, similarly generated by the certificate generation unit 1142. Fig. 3D shows the structure of a host certificate 331 also generated by the certificate generation unit 1142.

In Fig. 3A, the registration information 301 registered in the key issuing authority apparatus 1100 is made up of a controller ID (302), a controller key 303, and controller-specific numbers 1 (304) through N (306). The controller ID (302) and the controller key 303 are values uniquely assigned to an LSI lot (containing tens of thousands to millions of units) at manufacturing time. On the other hand, the controller-specific numbers are values that are unique to individual controllers. Accordingly, if the controller manufacturer manufactures, for example, a million controllers, then one controller ID and one controller key are generated whereas a million controller-specific numbers are generated. Registration information 301 that includes a million controller-specific numbers is thus generated.

In Fig. 3B, the media certificate 311 is made up of a controller ID (312), a partial medium ID (313), a controller-specific number 314, a media device public key 315, and a signature 316 generated for all four of the preceding.

In Fig. 3C, the Variation on the media certificate 321 uses a hash value 314a made from the controller-specific number rather than the controller-specific number 314 used in the media certificate 311 in Fig. 3B. The media certificate 321 is thus made up of a controller ID (312), a partial medium ID (313), a controller-specific number hash value 314a, a media device public key 315, and a signature 316a generated for all four of the preceding. A converted value obtained via a one-way function may also be used instead of the hash value. This alternative has the advantageous effect of preventing the protection level of unique keys from being weakened when the controller-specific numbers are sequential values and can therefore easily be guessed.

In Fig. 3D, the host certificate 331 is made up of ID information 332 that identifies the host key, a host device public key 333, and a signature 334 generated for both of the preceding data, as a whole.
Fig. 4A shows a media key 341 as generated by the concatenation unit 1133, before encryption. Fig. 4B shows an encrypted media key 351 encrypted by the encryption unit 1134 and with a signature affixed thereto by the signature unit 1136. Fig. 4C shows a whitelist 361 generated by the whitelist generation unit 1190 and with a signature affixed thereto by the signature unit 1191.

In Fig. 4A, the unencrypted media key 341 is made up of key ID information 342, a media device private key 343, and a medium-specific key 344.

In Fig. 4B, the encrypted media key 351 is made up of key ID information 352, an encrypted part 353 generated by the encryption unit 1134 encrypting the media device private key 343 from Fig. 4A and the medium-specific key 344 together, and a signature 354 for the key ID information 352 and the encrypted part 353, as a whole.

In Fig. 4C, the whitelist 361 is made up of pairs each consisting of a medium-specific key (y) and a partial medium ID (y), i.e., of pairs (medium-specific key (1)(362), partial medium ID (1)(363)) through (medium-specific key (Y)(366), partial medium ID (Y)(367)), and of a signature 368 for all of the pairs (medium-specific key (1)(362), partial medium ID (1)(363)) through (medium-specific key (Y)(366), partial medium ID (Y)(367)).

Fig. 5A shows a case in which the controller-specific number 371 is generated with a random number. Fig. 5B shows a hybrid case in which the first half of the controller-specific number 381 is a generated with a random number 382 whereas the second half thereof uses a sequential number 383,

These examples relate to ideas for assigning the controller-specific numbers received from the controller manufacturer. In Fig. 5A, the entirety of the controller-specific number 371 is a random number. In both Fig. 5A and Fig. 5B, the controller-specific number 314 to be written into the media certificate 311 from Fig. 3B may be the entirety of the controller-specific number, or may be only a portion thereof. If the controller-specific number is identified, the protection level of the unique key is weakened. By writing only a portion of the controller-specific number and disclosing only a portion of the controller-specific key to the media assembler, the protection level of the unique keys is maintained. In this case, however, since the controller-specific number is generated with a random number, uniqueness cannot be maintained using only a portion thereof, and a different media certificate may mistakenly be used. To address this problem, each controller-specific number may be provided with a portion having a sequentially determined value 383, as shown in Fig. 5B, so as to be uniquely identifiable within controller manufacturing units (e.g. lots of tens of thousands to millions) by the sequential part alone. With this approach, the protection level of the unique keys is maintained while allowing for corresponding controllers to be identified by registering only the sequential portion, and not the entire controller-specific number itself, as the controller-specific number 314 in the media certificate 311 shown in Fig. 3B.

### (Key Issuing Process Flow in Key Issuing Authority Apparatus 1100)

Fig. 6 shows the key issuing process flow for the key issuing authority apparatus 1100.

The key issuing authority apparatus 1100 generates and stores the root key pair consisting of the root public key and the root private key. Furthermore, in response to a request, the key issuing authority apparatus 1100 transmits the root public key to the controller manufacturer apparatus 1200 and to the key distribution server apparatus 1800 (S1110). The key issuing authority apparatus 1100 generates and stores the key pair consisting of the media device public key and the media device private key as well as the key pair consisting of the host device public key and the host device private key (S1120).

The dashed line labeled S1130 indicates reception of the controller ID and the controller key corresponding to the controller 1501 from the controller manufacturer.

The controller manufacturer apparatus 1200 registers a combination of the controller key, the controller ID, and the controller-specific number, all of which are embedded in the manufactured controller 1501, with the key issuing authority apparatus 1100. The key issuing authority apparatus 1100 stores the controller key, the controller ID, and the controller-specific number in mutual association (S1131).

The dashed line labeled S1140 indicates the key issued in response to an acquisition request for an encrypted media key and a media certificate from the media assembler apparatus 1400.

The key issuing authority apparatus 1100 receives an acquisition request for both an encrypted media key and a media certificate from the media assembler apparatus 1400. In such a case, the media device private key stored in the device key pair storage unit 1131 and the medium-specific key generated by the medium-specific key generation unit 1132 are concatenated by the concatenation unit 1133 to generate the media key. Furthermore, the encryption unit 1134 generates the encrypted media key by encrypting the media key using the unique key generated by the unique key generation unit 1116 from the controller key stored in the controller key storage unit 1113 and the controller-specific number stored in the controller-specific number storage unit 1115 (S1141). The concatenation unit 1141 generates media certificate source data by concatenating the media device public key stored in the device key pair storage unit 1131, the controller ID stored in the controller ID storage unit 1111, the partial medium ID generated by the partial medium ID generation unit 1140, and the controller-specific number stored in the controller-specific number storage unit 1115. In addition, the certificate generation unit 1142 generates a signature for the media certificate source data using the root private key stored in the root key pair storage unit, and then generates the media certificate made up of the media certificate source data and the signature (S1142). The encrypted media key and the media certificate are transmitted to the media assembler apparatus 1400 (S1143).

The dashed line in S1150 indicates the key issued in response to an acquisition request from the key distribution server apparatus 1800 or the playback apparatus 1900 for the host device private key and the host certificate.

Upon receipt of an acquisition request from the key distribution server apparatus 1800 or from the playback apparatus 1900 for the host device private key and the host certificate, the key issuing authority apparatus 1100 generates, using the root private key stored in the root key pair storage unit 1121, a signature for the host certificate source data, which is composed of the ID information and the host device public key stored in the device key pair storage unit 1131, and thus generates the host certificate from the host certificate source data and the signature (S1151). The key issuing authority apparatus 1100 then securely transmits the host certificate so generated and the host device private key associated therewith to the key distribution server apparatus 1800 or to the playback apparatus 1900 (S1152).

The dashed line in S1160 indicates generation and transmission of the whitelist.

Upon receiving a whitelist acquisition request from the key distribution server apparatus 1800, the whitelist generation unit 1190 generates a whitelist using the partial medium ID generated by the partial medium ID generation unit 1140. The signature unit 1191 then generates a signature for the whitelist using the root private key stored in the root key pair storage unit 11121 and affixes the signature so generated to the whitelist. Note that the whitelist may include not only the partial medium ID, but also a medium-specific key used for encrypting a content encryption title key registered in the recording medium apparatus 1500, a portion of the controller-specific number, a hash value of the controller-specific number, or a converted value automatically generated from a portion of or the entirety of the controller-specific number (S1161). The whitelist transmission unit 1192 transmits the whitelist to the key distribution server apparatus 1800 (S1162).

### (Detailed Structure of Controller Manufacturer Apparatus 1200)

Fig. 7 shows the detailed structure of the controller manufacturer apparatus 1200.

As shown in Fig. 7, the controller manufacturer apparatus 1200 includes a controller key generation unit 1210, a controller ID generation unit 1211, a root public key reception unit 1220, a controller manufacturing unit 1231, a controller-specific number addition unit 1232, a controller key transmission unit 1241, a controller ID transmission unit 1242, a controller-specific number transmission unit 1243, a controller transmission unit 1244, a writing tool generation unit 1260, and a writing tool transmission unit 1261.

The controller key generation unit 1210 generates the controller key to be embedded in the controller.

The controller ID generation unit 1211 generates the controller ID associated with the controller.

The root public key reception unit 1220 receives the root public key transmitted by the key issuing authority apparatus 1100.

The controller manufacturing unit 1231 manufactures the controller 1501 by setting the controller key generated by the controller key generation unit 1210, the controller ID generated by the controller ID generation unit 1211, and the root public key received by the root public key reception unit 1220 so as to be embedded at controller manufacture by, for example, incorporating the values thereof in advance into a mask used during LSI manufacture.

The controller-specific number addition unit 1232 adds a controller-specific number, which is unique to each controller, to the controller 1501 manufactured by the controller manufacturing unit 1231. For example, the controller-specific number may be added with eFUSE technology, whereby a unique number is engraved in each unit by being electrically burned through a portion of the electronic circuit.

The controller key transmission unit 1241 transmits the controller ID along with the corresponding controller key to the key issuing authority apparatus 1100.

The controller ID transmission unit 1242 transmits the controller key along with the corresponding controller ID to the key issuing authority apparatus 1100. The controller ID transmission unit 1242 also transmits the controller ID to the media assembler apparatus 1400.

The controller-specific number transmission unit 1243 transmits the controller key along with the corresponding controller ID and the controller-specific number to the key issuing authority apparatus 1100.

The controller transmission unit 1244 provides the manufactured controller 1501, to which the controller-specific number has been added after manufacture and paired with the associated controller ID, to the media assembler. When the media assembler purchases controllers in a quantity smaller than a controller 1501 manufacturing unit (lot), then in order to distinguish controllers purchased from the same lot, the controller-specific number transmission unit 1243 may transmit only the controller-specific numbers required, along with the corresponding controller ID, to the media assembler apparatus 1400. Alternatively, transmission of the controller-specific numbers to the media assembler apparatus 1400 may be omitted. Instead of transmitting the controller-specific number to the media assembler apparatus 1400, a portion of each controller-specific number, or a hash value thereof, or a converted value obtained by automatically conversion thereof may be transmitted.

If only the required controller-specific numbers are to be transmitted to the media assembler apparatus 1400, then the media assembler apparatus 1400 transmits the controller ID corresponding to the purchased controllers 1501 to the key issuing authority apparatus 1100 and requests issue of the media keys and the media certificates. The key issuing authority apparatus 1100 transmits the media keys and the media certificates that correspond to all of the controller-specific numbers associated with the received controller ID to the media assembler apparatus 1400. If the media assembler has not purchased controllers for all of the controller-specific numbers, then the media assembler receives excess media keys and media certificates. However, the media keys are encrypted, thus preventing the media assembler from using the excess media keys or media certificates so received. Therefore, no security problem is posed.

If the controller-specific numbers are not transmitted to the media assembler apparatus 1400, then the media assembler apparatus 1400 transmits the controller ID to the key issuing authority apparatus 1100. The controller manufacturer apparatus 1200 forwards the controller ID to the key issuing authority apparatus 1100, which then transmits the media keys and the media certificates corresponding to the received controller ID to the media assembler.

The writing tool generation unit 1260 generates a writing tool, which will be used by the media assembler apparatus 1400 for key writing. The detailed configuration of the writing tool is provided in the description of the key writing process performed by the media assembler apparatus 1400.

The writing tool transmission unit 1261 transmits the writing tool generated by the writing tool generation unit 1260 to the media assembler apparatus 1400.

### (Controller Manufacturing Process Flow by Controller Manufacturer)

Fig. 8 shows the controller manufacturing process flow performed by the controller manufacturer.

The controller manufacturer apparatus 1200 generates the controller ID and the controller key (S1250). The controller manufacturer apparatus 1200 receives the root public key from the key issuing authority apparatus 1100 (S1251). The controller manufacturer configures the controller ID and the controller key so generated, as well as the root public key so received, for embedding into the controller 1501. The controller manufacturer apparatus 1200 then manufactures the controller (S1252). The controller manufacturer apparatus 1200 uses eFUSE or the like to add a controller-specific number making the controller 1501 manufactured in S1252 individually identifiable (S1253). The controller manufacturer apparatus 1200 transmits the controller ID, the controller key, and the controller-specific number to the key issuing authority apparatus 1100 (S1254). Upon receiving an order for the controller 1501 from the media assembler, the controller manufacturer provides the controller to the media assembler. The controller manufacturer apparatus 1200 transmits the controller ID associated with the delivered controller and the controller-specific number to the media assembler apparatus 1400 (51255).

Through this manufacturing process flow, the controller ID, the controller key, and the root public key are embedded in the mask for manufacturing the controller 1501. If, for example, a million controllers are manufactured with the same mask, the values assigned to the controller key and the controller ID change for every million controllers. In other words, every group of one million controllers has the same controller ID and controller key.

### (Detailed Structure of Key Writing by Media Assembler Apparatus 1400 into Recording Medium Apparatus 1500)

Fig. 9 shows the detailed structure of the key writing into the recording medium apparatus 1500 by the media assembler apparatus 1400 using a writing tool 1600.

As shown in Fig. 9, the recording medium apparatus 1500 is made up of the controller 1501 and of flash memory 1502. The controller 1501 includes a controller ID storage unit 1510, a controller key storage unit 1511, a controller-specific number storage unit 1512, a unique key generation unit 1525, a signature verification unit 1522, a decryption unit 1523, a verification unit 1524, a writing unit 1571, a root public key storage unit 1530, a verification unit 1531, and a writing unit 1532. The flash memory 1502 includes an encrypted media key storage unit 1550 and a certificate storage unit 1551.

Furthermore, the writing tool 1600 includes a controller-specific number reception unit 1610, a controller ID reception unit 1611, a retrieval unit 1620, an encrypted media key and certificate storage unit 1621, an encrypted media key transmission unit 1630, and a certificate transmission unit 1631.

The controller 1501 is an LSI device received from the controller manufacturer, the internal operations of which are securely guarded so that values cannot be read therefrom by an external device.

The controller ID storage unit 1510 stores the controller ID. The controller ID is a unique value for each lot. A lot is, for example, a manufacturing unit that is manufactured using a single mask. A single lot may, for instance, include ten thousand to one million controllers.

The controller key storage unit 1511 stores the controller key. The controller key is a unique value for each lot. As described for the controller ID, a lot is, for example, a manufacturing unit that is manufactured using a single mask. A single lot may, for instance, include ten thousand to one million controllers. The controller ID and the controller key form a pair.

The controller-specific number storage unit 1512 stores controller-specific numbers. The controller-specific number is a unique value for each controller.

The unique key generation unit 1525 generates a unique key from the controller key stored in the controller key storage unit 1511 and from the controller-specific number stored in the controller-specific number storage unit 1512. The unique key is, for instance, calculated by substituting the controller key and the controller-specific number into some sort of equation. For example, an XOR operation may be performed on the controller key and a converted value obtained by converting the controller-specific number via a one-way function. Alternatively, a hash value obtained via hash calculation may be used instead of the one-way function in the XOR method. The unique key generation algorithm must be identical to the algorithm used in the unique key generation unit 1116 of the key issuing authority apparatus 1100.

The signature verification unit 1522 verifies the signature of the encrypted media key transmitted by the writing tool 1600. When signature verification is successful, decryption by the decryption unit 1523 is permitted. When signature verification fails, decryption by the decryption unit 1523 is not permitted.

If so permitted by the signature verification unit 1522, the decryption unit 1523 decrypts a portion of the encrypted media key transmitted by the writing tool 1600, using the unique key generated by the unique key generation unit 1525. If not so permitted by the signature verification unit 1522, the decryption unit 1523 does not decrypt the encrypted media key transmitted by the writing tool 1600.

Note that the order of processing by the signature verification unit 1522 and by the decryption unit 1523 may be reversed. In such a case, the signature for the media key is affixed to the media key before encryption, and the signature verification unit 1522 performs signature verification on the media key after decryption thereof by the decryption unit 1523. If signature verification is successful, the signature verification unit 1522 permits processing by the verification unit 1524. If signature verification fails, the signature verification unit 1522 does not permit processing by the verification unit 1524.

The verification unit 1524 verifies the decrypted media key generated through partial decryption by the decryption unit 1523. The verification method may, for example, involve determining whether a particular character sequence (such as the character sequence 0123456789) embedded in advance into the encrypted portion of the media key correctly appear after decryption. Alternatively, the verification method may involve generating a signature for a given value using the decrypted media device private key, and then performing signature verification on the given value using the media device public key recorded in the media certificate to determine the success of verification. When signature verification is successful, writing by the writing unit 1571 is permitted. When signature verification fails, writing by the writing unit 1571 is not permitted.

If so permitted by the verification unit 1524, the writing unit 1571 writes the encrypted media key transmitted by the writing tool 1600 as is, without further encryption, in the encrypted media key storage unit 1550. If not so permitted by the signature verification unit 1524, the writing unit 1571 does not write the encrypted media key transmitted by the writing tool 1600.

The root public key storage unit 1530 stores the root public key.

The verification unit 1531 verifies the signature of the media certificate transmitted by the writing tool 1600 using the root public key stored in the root public key storage unit 1530. When signature verification is successful, writing by the writing unit 1532 is permitted. When signature verification fails, writing by the writing unit 1532 is not permitted.

If so permitted by the verification unit 1531, the writing unit 1532 writes the media certificate transmitted by the writing tool 1600 in the certificate storage unit 1551. If not so permitted by the signature verification unit 1531, the writing unit 1532 does not write the media certificate transmitted by the writing tool 1600.

Note in the above structure, permission is individually acquired for writing the encrypted media key and the media certificate. However, a structure may also be adopted where, if permission for either the encrypted media key or the media certificate is not acquired, neither of the encrypted media key and the media certificate are recorded.

The encrypted media key storage unit 1550 stores the encrypted media key. The encrypted media key storage unit 1550 is a device external to the controller 1501 and is usually arranged as a region of flash memory.

The certificate storage unit 1551 stores the media certificate. The certificate storage unit 1551 is a device external to the controller 1501 and is usually arranged as a region of flash memory.

The controller-specific number reception unit 1610 executes a controller-specific number acquisition command, thereby receiving the controller-specific number from the controller-specific number storage unit 1512. The controller-specific number is source data for the unique key that protects the media key. If the controller-specific number is easily acquirable, the protection level of the media key is weakened. To maintain the protection level, a structure may be adopted wherein the controller-specific number acquisition command is not made public and cannot be generally used, such that only the writing tool 1600 is able to use the controller-specific number acquisition command. Furthermore, provision of the writing tool 1600 may be limited to the media assembler that has purchased the controller 1501. Further still, if the controller-specific number acquisition command is a general command, a malicious user might execute commands (i.e. perform an attack) on the controller 1501 or the recording medium apparatus 1500 using different values by trial and error in order to identify the controller-specific number acquisition command. To address this problem, a structure may be adopted so as to provide a function for preliminary authentication of the controller-specific number acquisition command between the controller 1501 and writing tool 1600 so that, before execution of the controller-specific number acquisition command, the writing tool 1600 and the controller 1501 perform mutual authentication, the controller-specific number acquisition command being usable only when authentication succeeds, i.e. when preliminary authentication is completed successfully. With this structure, the controller-specific number acquisition command cannot be generally used, and the controller-specific number is not divulged.

The controller-specific number reception unit 1610 may receive either the entire controller-specific number, or a portion of the controller-specific number. For instance, assuming the sample controller-specific number 381 shown in Fig. 5B, even though only the sequential portion 383 is transmitted to the writing tool 1600, retrieval of the corresponding encrypted media key and media certificate by the retrieval unit 1620 succeeds as long as a number uniquely identifiable within a manufacturing unit (lot) is provided in the sequential portion 383. In such a case, the media assembler does not acquire the non-transmitted random number portion 382. This method maintains a high protection level for the unique key. Alternatively, instead of providing the sequential portion, a portion of the controller-specific number or a hash value of the entire controller-specific number may be transmitted. A converted value generated by conversion via a one-way function may also be transmitted instead of the hash value. Through the use of a hash value or of conversion via a one-way function, the original controller-specific number cannot be inferred, thus maintaining the protection level.

The controller ID reception unit 1611 receives the controller ID from the controller ID storage unit 1510 of the controller 1501.

The retrieval unit 1620 retrieves, from the encrypted media key and certificate storage unit 1621, the encrypted media key and the media certificate corresponding to the controller ID received by the controller ID reception unit 1611 and the controller-specific number or sequential portion thereof received by the controller-specific number reception unit 1610.

The encrypted media key and certificate storage unit 1621 records the encrypted media key and the media key.

The encrypted media key transmission unit 1630 transmits the encrypted media key to the signature verification unit 1522, the decryption unit 1523, and the writing unit 1571 of the controller 1501.

The certificate transmission unit 1631 transmits the media certificate to the verification unit 1531 of the controller 1501.

Fig. 10A shows the structure of a decrypted media key 401. Fig. 4B shows a variation on the decrypted media key 401.

In Fig. 10A, the decrypted media key 401 is made up of key ID information 402, a media device private key 403, a medium-specific key 404, and a signature 405. In the decrypted media key 401, the media device private key 403 and medium-specific key 404 that were encrypted with the unique key are decrypted, and can be used as-is.

In Fig. 10B, the sample decrypted media key 411 includes the key ID information 402, the media device private key 403, the medium-specific key 404, and the signature 405 included in the decrypted media key 401, and further includes a particular character sequence 412 2 (such as 0123...) added in advance for encryption. The particular character sequence 412, the media device private key 403, and the medium-specific key 404 are encrypted with the unique key. The decryption unit 1523 decrypts the particular character sequence 412, the media device private key 403, and the medium-specific key 404 so encrypted to generate the decrypted media key 411 shown in Fig. 10B.

Fig. 11A shows data 421 provided to the writing tool 1600 by the controller 1501. Fig. 11B shows data 431, which is a variation on the data 421, provided to the writing tool 1600 by the controller 1501. Fig. 11C shows a bundle 441 consisting of the encrypted media key and the media certificate issued by the key issuing authority apparatus 1100 to the media assembler apparatus 1400.

In Fig. 11A, the data 421 provided to the writing tool 1600 by the controller 1501 include the controller ID (422) and the controller-specific number 423.

In Fig. 11B, the data 431 provided to the writing tool 1600 by the controller 1501 includes the controller ID (432) and the controller-specific number hash value 433. Accordingly, the media assembler cannot acquire the value of the controller-specific number, thus protecting the unique key.

In Fig. 11C, the bundle 441 consisting of the encrypted media key and the media certificate issued from the key issuing authority apparatus 1100 to the media assembler apparatus 1400 is written, for example, in the order of an encrypted media key (n) and media certificate (n) that form a pair for one piece of data (one file). The bundle 441 includes pairs 442, 443 ... 444. Each pair includes one encrypted media key and one media certificate.

### (Manufacturing Process Flow of Recording Medium Apparatus 1500 by Media Assembler)

Fig. 12 shows the manufacturing process flow of the recording medium apparatus 1500 as performed by the media assembler.

Upon ordering the controller 1501 from the controller manufacturer, the media assembler receives the controller 1501 therefrom. That is, the media assembler apparatus 1400 receives the controller 1501 from the controller manufacturer apparatus 1200 (S1481). The media assembler uses the controller 1501 so received to assemble the recording medium apparatus 1500. Normally, one controller 1501, flash memory, and housing are assembled to yield one recording medium apparatus 1500 (S1482). The media assembler apparatus 1400 requests that the key issuing authority apparatus 1100 issue the encrypted media key, the signature for the media key, and the media certificate by specifying the controller ID received from the controller manufacturer apparatus 1200. The media assembler 1400 then receives the encrypted media key, the signature for the media key, and the media certificate issued by the key issuing authority apparatus 1100 (S1483, S1485). Note that the encrypted media key, the media certificate, and the controller ID form a combination and cannot be used by a controller 1501 having a different controller ID. When a quantity of controllers 1501 that is less than the quantity of a manufacturing unit (lot), (e.g., ten thousand or a million), is purchased from the controller manufacturer, controller-specific numbers and the controller ID may be received as a set for the purchased quantity which is provided to the key issuing authority apparatus 1100 so as to order the controllers 1501. Alternatively, a hash value generated from each of the controller-specific numbers by the controller manufacturer apparatus 1200, or else only the sequential portion of each of the controller-specific numbers, may be received from the controller manufacturer apparatus 1200 instead of the controller-specific numbers as a whole and provided to the key issuing authority apparatus 1100 so as to order the controllers 1501.

The media assembler apparatus 1400 receives the writing tool 1600 from the controller manufacturer apparatus 1200, then writes the encrypted media key and the media certificate into the recording medium apparatus 1500 (S1486). The media assembler then sells the memory card or the like (S1490).

### (Detailed Key Writing Process (S1486) Process Flow by Media Assembler Apparatus 1400)

Fig. 13 shows the details of the key writing process (S1486 from Fig. 12) flow performed by the media assembler apparatus 1400.

The writing tool 1600 is operated by the media assembler apparatus 1400.

The writing tool 1600 performs preliminary processing, such as mutual authentication or the like, with the controller 1501 of the recording medium apparatus 1500. Only when mutual authentication succeeds can S1651 be executed. If mutual authentication fails, S1651 is not permitted to execute (S1650).

If mutual authentication succeeds, then the writing tool 1600 executes a controller-specific number acquisition command, thereby acquiring the controller ID and the controller-specific number from the controller 1501 (S1651). Using the controller ID and the controller-specific number so acquired, the writing tool 1600 retrieves the encrypted media key and the media certificate key corresponding to the controller ID and controller-specific number from within the encrypted media key and certificate storage unit 1621 (S1652). The writing tool 1600 transmits the encrypted media key and the media certificate obtained by retrieval to the controller 1501 and instructs that these be written (S1653).

For example, the controller 1501 determines whether a particular character sequence (such as the character sequence 01234...) correctly appears in the particular character sequence region of the encrypted part. Alternatively, the controller 1501 may generate some sort of signature using the decrypted media device private key and perform signature verification using the media device public key listed in the media certificate to determine the success of verification. If verification fails, the controller 1501 returns an error to the writing tool 1600 and does not perform subsequent processing (S1664). The controller 1501 stores the encrypted media key in the encrypted media key storage unit 1550 as is, without performing decryption (S1665). The controller 1501 stores the media certificate in the certificate storage unit 1551 (S1666).

### (Detailed Structure of Key Distribution Server Apparatus 1800 and Recording Medium Apparatus 1500)

Fig. 14 shows the detailed structure of the key distribution server apparatus 1800 and the recording medium apparatus 1500.

The recording medium apparatus 1500 may, for example, be mounted in a non-diagrammed mobile phone or similar. The recording medium apparatus 1500 may be connected to the key distribution server apparatus 1800 through the mobile phone unit, the mobile phone network, and the Internet. Alternatively, the recording medium apparatus 1500 may be mounted in a non-diagrammed content recording and playback apparatus. The recording medium apparatus 1500 may be connected to the key distribution server apparatus 1800 through the content recording and playback apparatus and the Internet.

As shown in Fig. 14, the key distribution server apparatus 1800 includes a host key reception unit 1810, a host key storage unit 1811, a host/media authentication unit 1812, a decryption unit 1813, a root public key reception unit 1830, a whitelist reception unit 1831, a whitelist storage unit 1832, a medium-specific key verification unit 1841, a title key storage unit 1851, and an encryption unit 1852.

Also, the recording medium apparatus 1500 is made up of the controller 1501 and of flash memory 1502. The controller 1501 includes a controller key storage unit 1511, a controller-specific number storage unit 1512, a root public key storage unit 1530, a unique key generation unit 1525, a decryption unit 1541, a host/media authentication unit 1542, and an encryption unit 1543. The flash memory 1502 includes the encrypted media key storage unit 1550, the certificate storage unit 1551, and an encrypted title key storage unit 1552.

The host key reception unit 1810 securely receives the host certificate for the host device public key and the host device private key from the key issuing authority apparatus 1100.

The host key storage unit 1811 stores the host device private key and the host certificate for the host device public key received by the host key reception unit 1810.

The host/media authentication unit 1812 performs mutual authentication with the host/media authentication unit 1542 of the controller 1501 in the recording medium apparatus 1500 using the host device private key and the host certificate for the host device public key stored by the host key storage unit 1811, thus generating a shared key. The mutual authentication will be described later.

The decryption unit 1813 decrypts the encrypted medium-specific key generated by the encryption unit 1543 of the controller 1501 in the recording medium apparatus 1500 using the shared key generated by the host/media authentication unit 1812.

The root public key reception unit 1830 receives the root public key transmitted by the key issuing authority apparatus 1100.

The whitelist reception unit 1831 receives the whitelist from the key issuing authority apparatus 1100.

The whitelist storage unit 1832 stores the whitelist received by the whitelist reception unit 1831.

The medium-specific key verification unit 1841 determines whether or not the medium-specific key acquired via decryption by the decryption unit 1813 is listed in the whitelist stored by the whitelist storage unit 1832. If the media unique key is contained in the whitelist, processing by the encryption unit 1852 is permitted. Otherwise, processing by the encryption unit 1852 is not permitted.

The title key storage unit 1851 stores a title key used for content encryption.

The encryption unit 1852 encrypts the title key stored in the title key storage unit 1851 using the medium-specific key decrypted by the decryption unit 1813, thus generating an encrypted title key.

The controller 1501 is an LSI device received from the controller manufacturer, the internal operations of which are securely guarded so that values cannot be read therefrom by an external device.

The controller key storage unit 1511 stores the controller key. The controller key has a value that is unique to each lot.

The controller-specific number storage unit 1512 stores controller-specific numbers. The controller-specific number is a value unique to each controller.

The root public key storage unit 1530 stores the root public key.

The unique key generation unit 1525 generates a unique key, which is unobtainable by devices external to the controller 1501, using the controller key stored in the controller key storage unit 1511 and the controller-specific number stored in the controller-specific number storage unit 1512. The unique key is calculated by substituting the controller key and the controller-specific number into an equation. For example, an XOR (exclusive or) operation may be performed on the controller key and a converted value calculated by converting the controller-specific number using a one-way function. Alternatively, a hash value may be used, which is obtained via hash calculation rather than via the one-way function. The unique key generation algorithm must be identical to the algorithm used in the unique key generation unit 1116 of the key issuing authority apparatus 1100.

The decryption unit 1541 decrypts the encrypted media key stored in the encrypted media key storage unit 1550 using the unique key generated by the unique key generation unit 1525, thus generating the media key. Note that since the media key generated by decryption is only used in the controller 1501, the media key cannot be read directly by a device external to the controller 1501.

The host/media authentication unit 1542 performs mutual authentication with the host/media authentication unit 1812 of the key distribution server apparatus 1800 using the media device private key included in the media key generated through decryption by the decryption unit 1541, the host certificate stored in the certificate storage unit 1551, and the root public key stored in the root public key storage unit 1530. The mutual authentication will be described later.

The encryption unit 1543 encrypts the medium-specific key included in the media key generated through decryption by the decryption unit 1541 using the shared key generated as a result of mutual authentication performed by the host/media authentication unit 1542, thus generating the encrypted medium-specific key.

The encrypted media key storage unit 1550 stores the encrypted medium-specific key generated by the encryption unit 1526. The encrypted media key storage unit 1550 is a device external to the controller 1501 and is usually arranged as a region of flash memory.

The certificate storage unit 1551 stores the media certificate.

The encrypted title key storage unit 1552 receives and stores the encrypted title key generated through encryption by the encryption unit 1852 of the key distribution server apparatus 1800.

### (Mutual Authentication)

Next, a host/media authentication unit A100 and a host/media authentication unit B100 are explained with reference to Fig. 15. The host/media authentication unit A100 and the host/media authentication unit B100, being units contained for this purpose by a first apparatus and a second apparatus, respectively, perform mutual authentication therebetween. The host/media authentication unit A100 corresponds, for example, to the host/media authentication unit 1812 in the key distribution server apparatus 1800 shown in Fig. 14. The host/media authentication unit B100 corresponds, for example, to the host/media authentication unit 1542 of the recording medium apparatus 1500 shown in Fig. 14.

As shown in Fig. 15, the host/media authentication unit A100 includes a random number generation unit A10, a decryption unit A20, a random number comparison unit A30, and an encryption unit A40. Likewise, the host/media authentication unit B100 includes an encryption unit B10, a random number generation unit B20, a decryption unit B30, and a random number comparison unit B40.

The detailed steps of the mutual authentication process are explained below with reference to Fig. 15. Such steps are, for example, as follows.

(A) The random number generation unit A10 of the host/media authentication unit A100 generates a random number R1 for transmission to the host/media authentication unit B100.
(B) The encryption unit B10 of the host/media authentication unit B100 encrypts the random number R1 using the unique key Ksc, thus generating cipher text E(Ksc, R1) for transmission to the host/media authentication unit A 100.
(C) The decryption unit A20 of the host/media authentication unit A100 decrypts the cipher text E (Ksc, R1) using the unique key Ksc, thus generating the decrypted text D (Ksc, (E (Ksc, R1))) (=R1).
(D) The random number comparison unit A30 of the host/media authentication unit A 100 confirms whether or not the decryption result from step (C) matches the random number generated in step (A). If there is a match, the host/media authentication unit A 100 determines that the other module is valid.
(E) The random number generation unit B20 of the host/media authentication unit B100 generates a random number R2 for transmission to the host/media authentication unit A 100.
(F) The encryption unit A40 of the host/media authentication unit A100 encrypts the random number R2 using the unique key Ksc, thus generating the cipher text E(Ksc, R2) for transmission to the host/media authentication unit B100.
(G) The decryption unit B30 of the host/media authentication unit B100 decrypts the cipher text E (Ksc, R2) using the unique key Ksc, thus generating the decrypted text D (Ksc, (E (Ksc, R2))) (=R2).
(H) The random number comparison unit B40 of the host/media authentication unit B100 confirms whether or not the decryption result from step (G) matches the random number generated in step (E). If there is a match, the host/media authentication unit B100 determines that the other module is valid.

The host/media authentication unit A100 and the host/media authentication unit B100 both apply a one-way function to R1||R2 using Ksc. The resulting value becomes the shared key. R1||R2 indicates the concatenated data obtained by concatenating R1 and R2 in the stated order.

Note that the steps for mutual authentication described above are only an example, and a different method of mutual authentication may also be used.

### (Process Flow of Key Distribution between Key Distribution Server Apparatus 1800 and Recording Medium Apparatus 1500)

Fig. 16 shows the process flow of key distribution between the key distribution server apparatus 1800 and the recording medium apparatus 1500.

The key distribution server apparatus 1800 receives the root public key transmitted by the key issuing authority apparatus 1100 (S18870). The key distribution server apparatus 1800 receives the whitelist from the key issuing authority apparatus 1100 (S1871). The key distribution server apparatus 1800 stores the whitelist (S1872). The key distribution server apparatus 1800 receives the host certificate for the host device public key and the host device private key from the key issuing authority apparatus 1100 (S1875). The key distribution server apparatus 1800 stores the host certificate for the host device public key and the host device private key (S1876).

The recording medium apparatus 1500 generates the unique key using the controller key and the controller-specific number (S1880). The recording medium apparatus 1500 decrypts the encrypted media key using the unique key, thus acquiring the media key (S1881). The key distribution server apparatus 1800 and the recording medium apparatus 1500 perform mutual host/media authentication, thus generating a shared key (S1882). The recording medium apparatus 1500 encrypts the medium-specific key included in the previously-acquired media key with the shared key generated during mutual authentication, thus generating an encrypted medium-specific key (S1890). The key distribution server apparatus 1800 receives the encrypted medium-specific key from the recording medium apparatus 1500 and decrypts the encrypted medium-specific key with the shared key, which is also generated by the key distribution server apparatus 1800 itself, thus acquiring the medium-specific key (S1891). The key distribution server apparatus 1800 determines whether or not the acquired medium-specific key is listed in the previously-acquired whitelist. If the medium-specific key is listed, title key encryption (S1893) is permitted. Otherwise, title key encryption (S1893) is not permitted (S1892). The title key used for encrypting content is encrypted with the medium-specific key, thus generating an encrypted title key (S1893). The recording medium apparatus 1500 receives and stores the encrypted title key from the key distribution server apparatus 1800 (S 1894).

Fig. 17 shows the structure of the playback system 20 for the recording medium apparatus 1500 according to Embodiment 1 of the present invention. The playback system 20 of the recording medium apparatus 1500 is made up of the recording medium apparatus 1500 and the playback apparatus 1900.

### (Detailed Structure of Recording Medium Apparatus 1500 and Playback Apparatus 1900)

Fig. 18 shows the detailed structure of the recording medium apparatus 1500 and the playback apparatus 1900.

The recording medium apparatus 1500 is made up of the controller 1501 and of flash memory 1502. The controller 1501 includes the controller key storage unit 1511, the controller-specific number storage unit 1512, the root public key storage unit 1530, the unique key generation unit 1525, the decryption unit 1541, the host/media authentication unit 1542, an encrypted title key reception unit 1561, a decryption unit 1562, and an encryption unit 1563. The flash memory 1502 includes the encrypted media key storage unit 1550, the certificate storage unit 1551, and an encrypted title key storage unit 1552.

Also, the playback apparatus 1900 includes a host key storage unit 1911, a host/media authentication unit 1912, an encrypted title key read unit 1921, a decryption unit 1922, a title key storage unit 1923, and a playback unit 1930.

The controller 1501 is an LSI device received from the controller manufacturer, the internal operations of which are securely guarded so that values cannot be directly read therefrom by an external device.

The controller key storage unit 1511 stores the controller key. The controller key has a value that is unique to each lot.

The controller-specific number storage unit 1512 stores controller-specific numbers. The controller-specific number is a value unique to each controller.

The root public key storage unit 1530 stores the root public key.

The unique key generation unit 1525 generates a unique key, which is unobtainable by devices external to the controller 1501, using the controller key stored by the controller key storage unit 1511 and the controller-specific number stored by the controller-specific number storage unit 1512. The unique key is calculated by substituting the controller key and the controller-specific number into an equation. For example, an XOR (exclusive or) operation may be performed on the controller key and a converted value obtained by converting the controller-specific number via a one-way function. Alternatively, a hash value calculated via hash calculation may be used with the controller key instead of the one-way function in the XOR operation. The unique key generation algorithm must be identical to the algorithm used in the unique key generation unit 1116 of the key issuing authority apparatus 1100.

The decryption unit 1541 decrypts the encrypted media key stored in the encrypted media key storage unit 1550 using the unique key generated by the unique key generation unit 1525, thus generating the media key. Note that since the media key generated by decryption is only used in the controller 1501, the media key cannot be read directly by a device external to the controller 1501.

The host/media authentication unit 1542 performs mutual authentication with the host/media authentication unit 1912 of the playback apparatus 1900 using the media device private key included in the media key generated through decryption by the decryption unit 1541, the host certificate stored in the certificate storage unit 1551, and the root public key stored in the root public key storage unit 1530.

The encrypted media key storage unit 1550 stores the encrypted media key. The encrypted media key storage unit 1550 is a device external to the controller 1501 and is usually arranged as a region of flash memory. The present invention is not limited to flash memory. Any recordable device, such as an HDD or SSD, may also be used.

The certificate storage unit 1551 stores the media certificate.

The encrypted title key storage unit 1552 stores the encrypted title key.

The encrypted title key reception unit 1561 receives the encrypted title key from the playback apparatus 1900.

The decryption unit 1562 decrypts the encrypted title key using the unique key generated by the unique key generation unit 1525, thus obtaining the title key.

The encryption unit 1563 encrypts the acquired title key using the shared key generated by the host/media authentication unit 1542, thus generating a shared key encrypted title key.

The host key storage unit 1911 stores the host certificate for the host device public key and the host device private key securely received from the key issuing authority apparatus 1100.

The host/media authentication unit 1912 performs mutual authentication with the host/media authentication unit 1542 of the controller 1501 in the recording medium apparatus 1500 using the host device private key and the host certificate for the host device public key stored in the host key storage unit 1911, thus generating a shared key.

The encrypted title key read unit 1821 reads the encrypted title key stored externally to the controller 1501 of the recording medium apparatus 1500 and requests that the controller 1501 decrypt the encrypted title key.

The decryption unit 1922 decrypts the shared key encrypted title key received from the controller 1501 using the shared key generated by the host/media authentication unit 1912, thus acquiring the title key.

The title key storage unit 1923 stores the title key acquired by the decryption unit 1922.

The playback unit 1930 decrypts the content encrypted with the title key, using the title key stored in the title key storage unit 1923, then plays back the content.

### (Playback Process Flow between Recording Medium Apparatus 1500 and Playback Apparatus 1900)

Fig. 19 shows the process flow of playback between the recording medium apparatus 1500 and the playback apparatus 1900.

The playback apparatus 1900 reads the encrypted title key from the recording medium apparatus 1500 and requests encrypted title key decryption by the controller of the recording medium apparatus 1500 (S1901).

The recording medium apparatus 1500 receives the encrypted title key decryption request (S1902).

The recording medium apparatus 1500 generates the unique key (S1903).

The recording medium apparatus 1500 decrypts the encrypted media key using the unique key so generated, thus acquiring the media key (S1904).

The recording medium apparatus 1500 and the playback apparatus 1900 perform mutual host/media authentication, generating the shared key (S 1905).

The recording medium apparatus 1500 decrypts the encrypted title key using the medium-specific key included in the media key, thus acquiring the title key (S1910).

The recording medium apparatus 1500 encrypts the title key using the shared key, thus generating the shared key encrypted title key (S 1911).

The playback apparatus 1900 acquires the shared key encrypted title key from the recording medium apparatus 1500 and decrypts the shared key encrypted title key with the shared key generated by mutual authentication, thus acquiring the title key (S 1912).

The playback apparatus 1900 decrypts the content encrypted with the title key using the title key so acquired, then plays back the content (S1920)

### (Variations)

(1) The above-described Embodiment is based on authentication using a pair consisting of a private key and a public key, which are assumed as key information. However, the present invention may instead be based on Media Key Block (MKB) technology, or on authentication technology with a different cryptosystem.

(2) In the above-described Embodiment, the recording medium apparatus is assumed to be a memory card such as an SD card. However, the present invention is not limited in this manner. A structure in which a storage device, such as a HDD, is combined with a control LSI is also possible. Furthermore, the present invention need not be removable like a memory card, but may also be an internal memory device, such as used in a cellular phone, eBook, or NetBook, combined with a control LSI.

(3) The following structures are also possible.

(A) As shown in Fig. 20, the controller 500, which is intended for embedding into a recording medium apparatus and controls access to the memory 500, includes a unique key generation unit 501, a decryption unit 502, a private key verification unit 503, and an encrypted key information write unit 504.

The unique key generation unit 501 generates a unique key to be embedded in the controller 500.

The decryption unit 502 operable acquires encrypted key information, which is generated by encrypting a private key for the recording medium apparatus with the unique key. The decryption unit 502 also decrypts the encrypted key information so acquired with the unique key to generate decrypted information.

The private key verification unit 503 verifies whether or not the decrypted information generated by the decryption unit is the private key.

The encrypted key information write unit 504 writes the encrypted key information so acquired to the memory 550 when the decrypted information is verified to be the private key.

(B) The controller 500 may further include an encrypted key information verification unit 510 (not diagrammed). The encrypted key information verification unit 501 acquires the encrypted key information and signature data, the signature data being generated by digitally signing the encrypted key information. Then, the encrypted key information verification unit 501 verifies the signature data using the encrypted key information so acquired, granting the decryption unit permission to decrypt if the verification succeeds and denying the decryption unit permission to decrypt if the verification fails.

The decryption unit 502 generates the decrypted information if permission to decrypt is obtained, and prohibits generation of the decrypted information if permission to decrypt is not obtained.

(C) A partial medium ID may also be generated from a controller-specific number assigned to the controller 500. The partial medium ID forms a portion of ID information identifying the recording medium apparatus. A media certificate includes at least the partial medium ID, and further includes signature data generated for at least the partial medium ID

The controller 500 may further include a media certificate verification unit 511 (not diagrammed) and a media certificate write unit 512 (not diagrammed).

The media certificate verification unit 511 acquires the media certificate and verifies the signature data included in the media certificate so acquired, then grants permission to write the media certificate if the signature data verification succeeds, and denies permission to write the media certificate if the signature data verification fails.

The media certificate write unit 512 writes the media certificate to memory if permission to write the media certificate is obtained, and prohibits writing of the media certificate if permission is not obtained.

The encrypted key information write unit 504 prohibits writing of the encrypted key information acquired by the decryption unit 502 to memory when permission to write the media certificate is not obtained from the media certificate verification unit 511.

(D) The controller 500 may also further include an information storage unit 521 (not diagrammed) that stores, in advance, a controller key and a controller-specific number assigned to the controller 500.

The unique key generation unit 501 generates the unique key using the controller key and the controller-specific number stored in the information storage unit 521.

(E) The encrypted key information may also be generated by encrypting a particular character sequence and the private key.

The private key verification unit 503 determines whether or not the particular character sequence is included in the decrypted information generated by the decryption unit 502, and then verifies the private key to be included in the decrypted information when the determination is affirmative.

(F) The private key verification unit 503 may also generate signature data by using the decrypted information generated by the decryption unit 502 as a key with which to affix a digital signature, then verify the signature data so generated by using a public key paired with the private key and judge the decrypted information generated by the decryption unit to be the private key when verification succeeds.

(4) The fallowing structures are also possible.

In an aspect of the present invention, a control method used by a controller for embedding in a recording medium apparatus and controlling memory access, includes: a unique key generation step of generating a unique key assigned to the controller; a decryption step of (i) acquiring encrypted key information, the encrypted key information being generated by encrypting a private key for the recording medium apparatus with the unique key, and (ii) decrypting the encrypted key information so acquired with the unique key to generate decrypted information; a private key verification step of verifying whether or not the decrypted information generated in the decryption step is the private key; and an encrypted key information write step of writing the encrypted key information so acquired to memory when the decrypted information is verified to be the private key.

In another aspect of the present invention, a computer program intended to control a controller for embedding in a recording medium apparatus and controlling memory access, the computer program causing the controller, which is a computer, to execute: a unique key generation step of generating a unique key assigned to the controller; a decryption step of (i) acquiring encrypted key information, the encrypted key information being generated by encrypting a private key for the recording medium apparatus with the unique key, and (ii) decrypting the encrypted key information so acquired with the unique key to generate decrypted information; a private key verification step of verifying whether or not the decrypted information generated in the decryption step is the private key; and an encrypted key information write step of writing the encrypted key information so acquired to memory when the decrypted information is verified to be the private key.

In a further aspect of the present invention, a computer-readable recording medium on which is recorded a computer program intended to control a controller for embedding in a recording medium apparatus and controlling memory access, the computer program causing the controller, which is a computer, to execute: a unique key generation step of generating a unique key assigned to the controller; a decryption step of (i) acquiring encrypted key information, the encrypted key information being generated by encrypting a private key for the recording medium apparatus with the unique key, and (ii) decrypting the encrypted key information so acquired with the unique key to generate decrypted information; a private key verification step of verifying whether or not the decrypted information generated in the decryption step is the private key; and an encrypted key information write step of writing the encrypted key information so acquired to memory when the decrypted information is verified to be the private key.

In a variant aspect of the present invention, a recording apparatus includes memory and a controller controlling memory access, the controller comprising: a unique key generation unit operable to generate a unique key assigned to the controller; a decryption unit operable to (i) acquire encrypted key information, the encrypted key information being generated by encrypting a private key for the recording medium apparatus with the unique key, and (ii) decrypt the encrypted key information so acquired with the unique key to generate decrypted information; a private key verification unit operable to verify whether or not the decrypted information generated by the decryption unit is the private key; and an encrypted key information write unit operable to write the encrypted key information so acquired to memory when the decrypted information is verified to be the private key.

In an alternate aspect of the present invention, a manufacturing method for a recording apparatus including memory and a controller controlling memory access, comprises: the steps, performed by a controller manufacturer, of manufacturing the controller with a controller key embedded therein, adding a controller-specific number unique to the controller after manufacturing, registering the controller key and the controller-specific number with a key issuing authority, and providing the controller to a media assembler; the step, performed by the key issuing authority, of issuing encrypted key information to the media assembler upon generating a unique key from the controller key and the controller-specific number received from the controller manufacturer and encrypting a private key for the recording apparatus using the unique key; the steps, performed by the media assembler, of assembling the recording apparatus from the controller received from the controller manufacturer and the memory, and supplying the encrypted key information received from the key issuing authority to the recording apparatus; and the steps, performed by the recording apparatus, of receiving the encrypted key information, decrypting the encrypted key information using the unique key generated from the controller key and the controller-specific number to obtain decrypted information, verifying whether the decrypted information so obtained is the private key for the recording apparatus, and writing the encrypted key information to memory when verification succeeds.

(5) The following structures are also possible.

In an alternative aspect of the present invention, a recording medium apparatus includes memory and a controller controlling memory access. The controller comprises: an information storage unit operable to store, in advance, a controller key and a controller-specific number assigned to the controller; an acquisition unit operable to acquire encrypted media key information by using a unique key to encrypt media key information that is to be assigned to the recording medium apparatus, the unique key being generated from the controller key and the controller-specific number; a verification unit operable, once the encrypted media key information has been acquired, to (i) generate a key identical to the unique key using the controller key and the controller-specific number stored in the information storage unit, (ii) decrypt the acquired encrypted media key information with the generated key, and (iii) verify whether or not the resulting media key information is valid; and a write unit operable to write the acquired encrypted media key information to memory when verification succeeds.

In another aspect of the present invention, a manufacturing method for a recording medium apparatus including memory and a controller controlling memory access, comprises: the steps, performed by a controllers manufacturer, of manufacturing the controller with a controller key embedded therein, adding a controller-specific number unique to the controller after manufacturing, registering the controller key and the controller-specific number with a key issuing authority, and providing the controller to a media assembler; the step, performed by the key issuing authority, of issuing encrypted key information to the media assembler upon generating a unique key from the controller key and the controller-specific number received from the controller manufacturer and encrypting a media key for embedding into the recording medium apparatus using the unique key; the steps, performed by the media assembler, of assembling the recording apparatus from the controller received from the controller manufacturer and the memory, and supplying the encrypted media key information received from the key issuing authority to the recording medium apparatus; and the steps, performed by the recording medium apparatus, of receiving the encrypted media key information, decrypting the encrypted media key information using the unique key generated from the controller key and the controller-specific number to obtain decrypted information, verifying whether the decrypted information so obtained is the media key for the recording medium apparatus, and writing the encrypted media key information to memory when verification succeeds.

As another aspect of the present invention, a writing apparatus for controlling the writing of encrypted key information into a recording apparatus includes memory and a controller controlling memory access. The writing apparatus comprises: a storage unit operable to store encrypted key information that is to be assigned to a given recording apparatus in correspondence with ID information that identifies a controller; an acquisition unit operable to acquire controller ID information from the controller; a retrieval unit operable to retrieve the encrypted key information corresponding to the acquired controller ID information from the storage unit; and an output unit operable to output the encrypted key information so acquired to the recording apparatus.

The ID information includes a controller ID that identifies the controller, and a controller-specific number that is unique to each controller. The retrieval unit may retrieve the encrypted key information by using the controller ID and the controller-specific number.

The ID information includes a controller ID that identifies the controller, and a hash value of a controller-specific number that is unique to each controller. The retrieval unit may retrieve the encrypted key information by using the controller ID and the hash value.

The ID information includes a controller ID that identifies the controller, and a controller-specific number that is unique to each controller and that includes a sequential portion. The retrieval unit may retrieve the encrypted key information by using the controller ID and the sequential portion of the controller-specific number.

The writing device may further include an authentication unit that authenticates the validity of the controller. The controller further authenticates the writing apparatus. The acquisition unit acquires the ID information when the controller is authenticated as valid by the authentication unit and the writing device is authenticated by the controller.

As a further aspect of the present invention, a control method is used in a writing apparatus for controlling the writing of encrypted key information into a recording apparatus made up of memory and a controller controlling memory access. The writing apparatus includes a storage unit operable to store encrypted key information that is to be assigned to a given recording apparatus in correspondence with ID information that identifies the controller. The control method comprises: an acquisition step of acquiring controller ID information from the controller; a retrieval step of retrieving the encrypted key information corresponding to the acquired controller ID information from the storage unit; and an output step of outputting the encrypted key information so acquired to the recording apparatus.

As yet a further aspect of the present invention, a control program is executed by a writing apparatus for controlling the writing of encrypted key information into a recording apparatus made up of memory and a controller controlling memory access, the writing apparatus including a storage unit operable to store encrypted key information that is to be assigned to the recording apparatus in correspondence with ID information that identifies the controller. The program causes the writing apparatus, which is a computer, to execute: an acquisition step of acquiring controller ID information from the controller; a retrieval step of retrieving the encrypted key information corresponding to the acquired controller ID information from the storage unit; and an output step of outputting the encrypted key information so acquired to the recording apparatus.

As yet another aspect of the present invention, a control program is recorded on a computer-readable recording medium for execution by a writing apparatus for controlling the writing of encrypted key information into a recording apparatus made up of memory and a controller controlling memory access, the writing apparatus including a storage unit operable to store encrypted key information that is to be assigned to the recording apparatus in correspondence with ID information that identifies the controller. The program causes the writing apparatus, which is a computer, to execute: an acquisition step of acquiring controller ID information from the controller; a retrieval step of retrieving the encrypted key information corresponding to the acquired controller ID information from the storage unit; and an output step of outputting the encrypted key information so acquired to the recording apparatus.

As another further aspect of the present invention, a writing apparatus for controlling the writing of media key information into a recording medium apparatus includes memory and a controller controlling memory access. The writing apparatus comprises: a storage unit operable to store encrypted media key information that is to be assigned to a given recording medium apparatus in correspondence with ID information that identifies the controller; an acquisition unit operable to acquire controller ID information from the controller; a retrieval unit operable to retrieve the encrypted media key information corresponding to the acquired controller ID information from the storage unit; and an output unit operable to output the encrypted media key information so acquired to the recording medium apparatus.

The ID information includes a controller ID that identifies the controller, and a controller-specific number that is unique to each controller. The retrieval unit may retrieve the encrypted media key information by using the controller ID and the controller-specific number.

The ID information includes a controller ID that identifies the controller, and a hash value of a controller-specific number that is unique to each controller. The retrieval unit may retrieve the encrypted media key information by using the controller ID and the hash value.

The ID information includes a controller ID that identifies the controller, and a controller-specific number that is unique to each controller and that includes a sequential portion. The retrieval unit may retrieve the encrypted media key information by using the controller ID and the sequential portion of the controller-specific number.

The writing device may further include an authentication unit that authenticates the validity of the controller. The controller further authenticates the writing apparatus. The acquisition unit acquires the ID information when the controller is authenticated as valid by the authentication unit and the writing device is authenticated by the controller.

In a further aspect of the present invention, a key distribution server apparatus for distributing a title key used to decrypt encrypted content comprises: a whitelist storage unit in which are stored medium-specific keys assigned to valid recording medium apparatuses; a decryption unit operable to obtain an encrypted medium-specific key from a recording medium apparatus and decrypt the encrypted medium-specific key so obtained to generate a medium-specific key; a verification unit operable to verify whether or not the medium-specific key so generated is stored in the whitelist storage unit; and an encryption unit operable to (i) encrypt the title key for output to the recording medium apparatus if the medium-specific key is verified to be stored in the whitelist generation unit, and (ii) prohibit the output of the title key if the medium-specific key is not verified to be stored in the whitelist generation unit.

In another aspect of the present invention, a control method is used in a key distribution server apparatus for distributing a title key used to decrypt encrypted content. The key distribution server apparatus includes a whitelist storage unit in which are recorded medium-specific keys assigned to valid recording medium apparatuses. The control method comprises: a decryption step of obtaining an encrypted medium-specific key from a recording medium apparatus and decrypting the encrypted medium-specific key so obtained to generate a medium-specific key; a verification step of verifying whether or not the generated medium-specific key is stored in the whitelist storage unit; and an encryption step of (i) encrypting the title key for output to the recording medium apparatus if the medium-specific key is verified to be stored in the whitelist generation unit, and (ii) prohibiting the output of the title key if the medium-specific key is not verified to be stored in the whitelist generation unit.

In yet another aspect of the present invention, a control program is used in a key distribution server apparatus for distributing a title key used to decrypt encrypted content. The key distribution server apparatus includes a whitelist storage unit in which are recorded medium-specific keys assigned to valid recording medium apparatuses. The program causes the key distribution server, which is a computer, to execute: a decryption step of obtaining an encrypted medium-specific key from a recording medium apparatus and decrypting the encrypted medium-specific key so obtained to generate a medium-specific key; a verification step of verifying whether or not the generated medium-specific key is stored in the whitelist storage unit; and an encryption step of (i) encrypting the title key for output to the recording medium apparatus if the medium-specific key is verified to be stored in the whitelist generation unit, and (ii) prohibiting the output of the title key if the medium-specific key is not verified to be stored in the whitelist generation unit.

In yet a further aspect of the present invention, a control program recorded on a computer-readable recording medium is used in a key distribution server apparatus for distributing a title key used to decrypt encrypted content. The key distribution server apparatus includes a whitelist storage unit in which are recorded medium-specific keys assigned to valid recording medium apparatuses. The program causes the key distribution server, which is a computer, to execute: a decryption step of obtaining an encrypted medium-specific key from a recording medium apparatus and decrypting the encrypted medium-specific key so obtained to generate a medium-specific key; a verification step of verifying whether or not the generated medium-specific key is stored in the whitelist storage unit; and an encryption step of (i) encrypting the title key for output to the recording medium apparatus if the medium-specific key is verified to be stored in the whitelist generation unit, and (ii) prohibiting the output of the title key if the medium-specific key is not verified to be stored in the whitelist generation unit.

(6) The following structures are also possible.

In one aspect of the present invention, a recording apparatus, a playback apparatus, and a manufacturing method therefor are provided that prevent a recording medium apparatus manufacturer from fraudulently storing the same ID information on a plurality of recording medium apparatuses by having a controller manufacturer register controller-unique numbers with a key issuing authority in advance and encrypting these numbers for exclusive use by the corresponding controller

In another aspect of the present invention, a manufacturing system comprises a key issuing means configured such that, when a key issuing authority issues key information for writing into the recording medium apparatus to a media assembler, the key information including a media device private key, a medium-specific key, and so on, and the key information is encrypted with a unique key associated with a controller key and a controller-specific number already embedded in a controller so that the key information is useable only by the controller in which the corresponding controller-specific number is embedded; a controller manufacturing means configured to manufacture a controller by embedding therein a portion of ID information (media ID) for the recording medium apparatus; a writing means configured to write keys at high speed using a writing tool in association with key information in the recording medium apparatus for a group of controllers in which the same controller key is embedded due to being manufactured with the same mask; and a detection means configured to detect a lack of authorization during key distribution.

According to an aspect of the present invention, controllers are manufactured with the controller key a portion of the media ID embedded therein, and controllers manufactured with the same mask have the same controller key. Furthermore, a controller-specific number unique to each controller is added. The key issuing authority issues key information in association with the controller key and the controller-specific number, such that the key information cannot be used by a different controller. This provides the advantageous effect of preventing unauthorized use, such as writing the same media ID into a plurality of cards.

Under a conventional manufacturing method, a memory card assembler purchases controllers, key information, and flash memory, and writes media IDs into the memory cards after assembly. This method poses a problem in that the protection level of the media ID is weak, and unauthorized duplicate cards can be produced by copying the data on the flash memory in full. According to the memory card pertaining to the present invention, key information is issued after encryption with a controller key embedded in a control LSI (controller), so that the key information can only be used by the corresponding controller, thus preventing unauthorized use of the key information by the memory card assembler. Unauthorized rewriting of the media ID is also prevented by embedding part of the media ID in the controller.

In another aspect of the present invention, a controller manufacturer manufacturing controllers embedded in a recording medium apparatus, a key issuing authority issuing key information to be written into the recording medium apparatus, and a media assembler assembling the recording medium apparatus using the controller and a storage device are employed in a manufacturing system. The controller manufacturer manufactures the controller with an embedded controller key, adds a controller-specific number to the controller after manufacturing, registers the controller key and the controller-specific number with the key issuing authority, and provides the controller to the media assembler. The key issuing authority generates the key information to be embedded in the recording medium apparatus, and issues encrypted key information to the media assembler upon encryption of the key information with a unique key generated from the controller key and the controller-specific number received from the controller manufacturer. The media assembler assembles the recording medium apparatus using the storage device and the controller received from the controller manufacturer, and then writes the encrypted key information received from the key issuing authority into the recording medium apparatus. When the encrypted key information is written into the recording medium apparatus, the recording medium apparatus decrypts the encrypted key information with the unique key generated from the controller key and the controller-specific number, verifies whether the decrypted key information is correct, and writes the encrypted key information into the storage device if verification is successful.

The controller manufacturer provides a writing tool for writing the encrypted key information into the controller. The writing tool acquires the controller ID and the controller-specific number from the controller, retrieves the encrypted key information corresponding to the controller from among a plurality of pieces of encrypted key information using the controller ID and the controller-specific number, and transmits the encrypted key information so retrieved to the controller. The media assembler writes the encrypted key information using the writing tool.

Before acquiring the controller ID and the controller-specific number from the controller, the writing tool performs mutual authentication with the controller using information only known to the controller manufacturer, acquiring the controller ID and the controller-specific number from the controller only when mutual authentication is successful.

The controller manufacturer provides a writing tool for writing the encrypted key information into the controller. The writing tool acquires the controller ID and the hash value of the controller-specific number from the controller, retrieves the encrypted key information corresponding to the controller from among a plurality of pieces of encrypted key information using the controller ID and the hash value of the controller-specific number, and transmits the encrypted key information so retrieved to the controller. The media assembler writes the encrypted key information using the writing total.

The controller manufacturer provides a writing tool for writing the encrypted key information into the controller. The controller-specific number includes a non-sequential random number portion and a sequential portion provided with a sequential number. The writing tool acquires the controller ID and the sequential portion of the controller-specific number from the controller, retrieves the encrypted key information corresponding to the controller from among a plurality of pieces of encrypted key information using the controller ID and the sequential portion of the controller-specific number, and transmits the encrypted key information so retrieved to the controller. The media assembler writes the encrypted key information using the writing tool.

The controller decrypts the encrypted key information with the unique key to acquire the key information and verifies whether the key information is correct according to whether or not a particular character sequence contained in the key information is decrypted correctly.

The controller decrypts the encrypted key information with the unique key to acquire the key information, generates a signature using a private key included in the key information, and verifies whether the key information is correct by verifying the signature using a public key corresponding to the private key.

The key issuing authority calculates partial medium IDs that each form part of a media ID automatically generated from the controller-specific number received from the controller manufacturer, generates a whitelist containing the partial medium IDs, and provides the whitelist to a key distribution server. When communicating with the recording medium apparatus, the key distribution server confirms the authorization of the recording medium apparatus by using the whitelist.

The key issuing authority calculates partial medium IDs that each form part of a media ID automatically generated from the controller-specific number received from the controller manufacturer, generates a whitelist containing the partial medium IDs, and provides the whitelist to a key distribution server. When communicating with the recording medium apparatus, the key distribution server confirms the authorization of the recording medium apparatus by using the whitelist.

The key issuing authority calculates partial medium IDs that each form part of a media ID automatically generated from the controller-specific number received from the controller manufacturer, generates a medium-specific key for encrypting a title key used to encrypt content recorded on the recording medium apparatus, generates a whitelist containing the partial medium IDs and the medium-specific key, and provides the whitelist to a key distribution server. When communicating with the recording medium apparatus, the key distribution server confirms the authorization of the recording medium apparatus by using the whitelist.

The recording medium apparatus pertaining to the present invention allows for verification before market release even if a media assembler mistakenly writes the same key into a plurality of recording medium apparatuses. Furthermore, even if such recording medium apparatuses are released to the market, the present invention prevents malicious use by stopping the distribution of keys to such recording medium apparatuses through the use of a whitelist.

(7) Each of the above-described apparatuses is, specifically, a computer system made up of a microprocessor, ROM, RAM, a hard disk unit, and so on. The RAM and the hard disk unit store computer programs therein. A computer program is made up of a plurality of lines of instruction code that, when combined, instruct the computer so as to executed a predetermined function. Each of the apparatuses executes the functions thereof through operations of the microprocessor in accordance with the computer programs. Specifically, the microprocessor fetches the instructions included in the computer program one at a time, decodes the instructions so fetched, and operates according to the results.

The apparatuses are not limited to computer systems including all of a microprocessor, ROM, RAM, a hard disk unit, a display unit, a keyboard, a mouse, and so one, but may also exist as a computer system comprising only a subset of these elements.

Alternatively, as the microprocessor is operated according to the instructions included in the computer programs stored in the RAM or the hard disk unit, the computer programs and microprocessor can make up a single hardware circuit, the operations thereof being deemed as operating.

(8) The components of each of the above-described apparatuses may, in whole or in part, be realized as a single system LSI (Large-Scale Integration). A system LSI is a multifunctional LSI manufactured such that a plurality of elements are integrated onto a single chip. Specifically, a system LSI is a computer system made up of a microprocessor, ROM, RAM, and so on. The RAM stores computer programs therein. The system LSI executes the functions thereof through operations of the microprocessor in accordance with the computer programs.

Alternatively, the components of the above-described apparatuses may be realized separately on individual chips, or be realized in whole or in part on a single chip. Also, the system LSI may instead be an IC, an LSI, a super LSI, or an ultra LSI, all of which differ by degree of integration.

An LSI is made up of a plurality of circuit blocks.

Of course, the integrated circuit method need not be restricted to LSI, and may also be a private circuit or a general-purpose processor. After manufacture, the LSI may be used in a FPGA (Field Programmable Gate Array) or a reconfigurable processor.

Furthermore, should progress or discoveries in the semiconductor field lead to new technology that comes to replace LSI, then such technology may, of course, be used to integrate the functional blocks. Applications to biotechnology are also plausible.

(9) The components of each of the above-described apparatuses may, in whole or in part, be realized as a removable IC card insertable therein, or as a single module. The IC card or module is a computer system made up of a microprocessor, ROM, RAM, and so on. The IC card or module may also include a multifunctional LSI as described above. The IC card or module executes the functions thereof through operations of the microprocessor in accordance with the computer programs. The IC card or module may also be made tamper-resistant.

(10) The present invention may be realized in a method as described above. Also, such a method may be a computer program executable by a computer, or a digital signal derived from such a computer program.

The present invention may be non-transitorily recorded as a computer program or digital signal on a computer-readable recording medium, such as a floppy disk, hard disk, CD-ROM, MO, DVD, DVD-ROM, DVD-RAM, BD, semiconductor memory, and so on. Also, the computer program recorded on such a recording medium may instead be a digital signal.

The present invention may also be realized by transmitting the computer program or digital signal over electronic communication lines, over wired or wireless communication lines, over a network such as the Internet, by data broadcasting, and so on.

Furthermore, the present invention may be a computer system comprising a microprocessor and memory, the memory storing the computer program therein and the microprocessor being operated according to the computer program.

Finally, the present invention may also be realized in another, independent computer system by recording the program or digital signal on the recording medium for transport, or by transporting the program or digital signal over a network or the like.

(11) The present invention may be realized as a combination of the above-described Embodiments and Variations thereof.

Although the present invention has been described in detail with reference to the accompanying drawings, many other Embodiments and Variations thereof are also possible, as is naturally apparent to those skilled in the art. Accordingly, such Embodiments and Variations falling within the scope of the present invention should be construed as being included therein.

### [Industrial Applicability]

The controller pertaining to the present invention decrypts the encrypted key information using a unique key assigned thereto and writes the encrypted key information so obtained to memory of the decrypted key information thus generated is deemed to be a private key for a recording medium apparatus. Therefore, the controller has the advantageous effect of ensuring that the same encrypted key information does not come to be stored in a plurality of recording medium apparatuses, and can be used as a controller embedded in a recording medium apparatus to control memory access.

### [Reference Signs List]

- 1100: Key issuing authority apparatus
- 1200: Controller manufacturer apparatus
- 1400: Media assembler apparatus
- 1500: Recording medium apparatus
- 1600: Writing tool
- 1800: Key distribution server apparatus
- 1900: Playback apparatus

## Claims

1. A controller for embedding in a recording medium apparatus and controlling memory access, comprising:
a unique key generation unit operable to generate a unique key assigned to the controller;
a decryption unit operable to (i) acquire encrypted key information, the encrypted key information being generated by encrypting a private key for the recording medium apparatus with the unique key, and (ii) decrypt the encrypted key information so acquired with the unique key to generate decrypted information;
a private key verification unit operable to verify whether or not the decrypted information generated by the decryption unit is the private key; and
an encrypted key information write unit operable to write the encrypted key information so acquired to memory when the decrypted information is verified to be the private key.

2. The controller of Claim 1, further comprising:
an encrypted key information verification unit operable to (i) acquire the encrypted key information and signature data, the signature data being generated by digitally signing the encrypted key information, and (ii) verify the signature data using the encrypted key information so acquired, granting the decryption unit permission to decrypt if the verification succeeds and denying the decryption unit permission to decrypt if the verification fails, wherein
the decryption unit generates the decrypted information if permission to decrypt is obtained, and prohibits generation of the decrypted information if permission to decrypt is not obtained.

3. The controller of Claim I, wherein
a partial medium ID is generated from a controller-specific number assigned to the controller, the partial medium ID forms a portion of ID information identifying the recording medium apparatus,
a media certificate includes at least the partial medium ID and further includes signature data generated for at least the partial medium ID,
the controller further comprises:
a media certificate verification unit operable to (i) acquire the media certificate and verify the signature data included in the media certificate so acquired, and (ii) grant permission to write the media certificate if the signature data verification succeeds, and deny permission to write the media certificate if the signature data verification fails, and
a media certificate write unit operable to write the media certificate to memory if permission to write the media certificate is obtained and to prohibit writing of the media certificate if permission is not obtained, and
the encrypted key information write unit prohibits writing of the encrypted key information acquired by the decryption unit to memory when permission to write the media certificate is not obtained from the media certificate verification unit.

4. The controller of Claim 1, further comprising:
an information storage unit operable to store, in advance, a controller key and a controller-specific number assigned to the controller, wherein
the unique key generation unit generates the unique key using the controller key and the controller-specific number stored in the information storage unit.

5. The controller of Claim 1, wherein
the encrypted key information is generated by encrypting a particular character sequence and the private key, and
the private key verification unit (i) determines whether or not the particular character sequence is included in the decrypted information generated by the decryption unit, and (ii) verifies the private key to be included in the decrypted information when the determination is affirmative.

6. The controller of Claim 1, wherein
the private key verification unit (i) generates signature data by using the decrypted information generated by the decryption unit as a key to affix a digital signature, (ii) verifies the signature data so generated by using a public key paired with the private key, and (iii) judges the decrypted information generated by the decryption unit to be the private key when verification succeeds.

7. A control method used by a controller for embedding in a recording medium apparatus and controlling memory access, including:
a unique key generation step of generating a unique key assigned to the controller;
a decryption step of (i) acquiring encrypted key information, the encrypted key information being generated by encrypting a private key for the recording medium apparatus with the unique key, and (ii) decrypting the encrypted key information so acquired with the unique key to generate decrypted information;
a private key verification step of verifying whether or not the decrypted information generated in the decryption step is the private key; and
an encrypted key information write step of writing the encrypted key information so acquired to memory when the decrypted information is verified to be the private key.

8. A computer program intended to control a controller for embedding in a recording medium apparatus and controlling memory access, the computer program causing the controller, which is a computer, to execute:
a unique key generation step of generating a unique key assigned to the controller;
a decryption step of (i) acquiring encrypted key information, the encrypted key information being generated by encrypting a private key for the recording medium apparatus with the unique key, and (ii) decrypting the encrypted key information so acquired with the unique key to generate decrypted information;
a private key verification step of verifying whether or not the decrypted information generated in the decryption step is the private key; and
an encrypted key information write step of writing the encrypted key information so acquired to memory when the decrypted information is verified to be the private key.

9. A computer-readable recording medium on which is recorded a computer program intended to control a controller for embedding in a recording medium apparatus and controlling memory access, the computer program causing the controller, which is a computer, to execute:
a unique key generation step of generating a unique key assigned to the controller;
a decryption step of (i) acquiring encrypted key information, the encrypted key information being generated by encrypting a private key for the recording medium apparatus with the unique key, and (ii) decrypting the encrypted key information so acquired with the unique key to generate decrypted information;
a private key verification step of verifying whether or not the decrypted information generated in the decryption step is the private key; and
an encrypted key information write step of writing the encrypted key information so acquired to memory when the decrypted information is verified to be the private key.

10. A recording apparatus including memory and a controller controlling memory access, the controller comprising:
a unique key generation unit operable to generate a unique key assigned to the controller;
a decryption unit operable to (i) acquire encrypted key information, the encrypted key information being generated by encrypting a private key for the recording medium apparatus with the unique key, and (ii) decrypt the encrypted key information so acquired with the unique key to generate decrypted information;
a private key verification unit operable to verify whether or not the decrypted information generated by the decryption unit is the private key; and
an encrypted key information write unit operable to write the encrypted key information so acquired to memory when the decrypted information is verified to be the private key.

11. A manufacturing method for a recording apparatus including memory and a controller controlling memory access, comprising:
the steps, performed by a controller manufacturer, of manufacturing the controller with a controller key embedded therein, adding a controller-specific number unique to the controller after manufacturing, registering the controller key and the controller-specific number with a key issuing authority, and providing the controller to a media assembler;
the step, performed by the key issuing authority, of issuing encrypted key information to the media assembler upon generating a unique key from the controller key and the controller-specific number received from the controller manufacturer and encrypting a private key for the recording apparatus using the unique key;
the steps, performed by the media assembler, of assembling the recording apparatus from the controller received from the controller manufacturer and the memory, and supplying the encrypted key information received from the key issuing authority to the recording apparatus; and
the steps, performed by the recording apparatus, of receiving the encrypted key information, decrypting the encrypted key information using the unique key generated from the controller key and the controller-specific number to obtain decrypted information, verifying whether the decrypted information so obtained is the private key for the recording apparatus, and writing the encrypted key information to memory when verification succeeds.
